# EUROPEAN PATENT SPECIFICATION

(11) **EP 3 104 005 B1**
(45) Date of publication and mention of the grant of the patent: **11.08.2021**
(21) Application number: 16154339.2
(22) Date of filing: 04.02.2016
(51) Int. Cl.: F04B 1/0408, F03D 17/00, F03C 1/28, F03D 9/28, F04B 17/02, F04B 49/22, F04B 53/10, F04B 51/00

(54) **DIAGNOSIS SYSTEM FOR A HYDRAULIC MACHINE, A HYDRAULIC MACHINE, A WIND TURBINE POWER GENERATING APPARATUS, AND A METHOD OF DIAGNOSING HYDRAULIC MACHINE**
DIAGNOSESYSTEM FÜR EINE HYDRAULISCHE MASCHINE, EINE HYDRAULISCHE MASCHINE, EINE WINDTURBINENSTROMERZEUGUNGSVORRICHTUNG UND EINE VERFAHREN ZUR DIAGNOSE EINER HYDRAULISCHEN MASCHINE
SYSTÈME DE DIAGNOSTIC POUR MACHINE HYDRAULIQUE, UNE MACHINE HYDRAULIQUE, UNE APPAREIL DE GÉNÉRATION D'ÉNERGIE ÉOLIENNE ET UNE PROCÉDÉ DE DIAGNOSTIC DE MACHINE HYDRAULIQUE

(30) Priority: 11.06.2015 JP 2015118534
(43) Date of publication of application: 14.12.2016
(73) Proprietor: Mitsubishi Heavy Industries, Ltd., Tokyo 108-8215 (JP)
(72) Inventor: KII, Tsutomu, Tokyo, 108-8215 (JP)
(74) Representative: Henkel & Partner mbB

(56) References cited:
- EP-A2- 2 631 477
- WO-A1-2012/073389
- WO-A2-2011/104548
- GB-A- 2 477 996
- US-A- 5 846 056

## Description

### TECHNICAL FIELD

The present disclosure relates to a diagnosis system of a hydraulic machine, a hydraulic machine, a wind turbine power generating apparatus, and a method of diagnosing a hydraulic machine.

### BACKGROUND ART

A hydraulic machine such as a hydraulic pump and a hydraulic motor is conventionally known.

For instance, US 2010/0040470A describes a hydraulic machine which performs conversion between fluid energy of working fluid and rotational energy of a rotation shaft, utilizing a cyclic volume change of a working chamber formed by a cylinder and a piston.

Further, WO 2011/104547A describes an approach for suppressing occurrence of abnormality in opening and closing of a valve for switching a communication state between a working chamber of a hydraulic machine and outside of the working chamber, which is to control an opening-closing timing of the valve in accordance with the characteristics of the constituent members of a fluid working machine or a state of working fluid (working oil).

GB 2477996A discloses a fluid working machine comprising six working chambers driven by an eccentric crank shaft and each of the working chambers comprises a cylinder, a piston slidably mounted on an eccentric crank shaft, and valves between each cylinder and a low pressure manifold and two high pressure manifolds. The controller receives crank shaft speed and position data from speed and position sensor and other demand signals to issue command signals to the valves within the working chambers. The controller also receives one or more fluid pressure measurements from pressure transducers positioned on high pressure fluid lines upstream of the working. This document also discloses a diagnosis system for the hydraulic machine which is implemented in the control unit and which receives working chamber status data which comprises acoustic data determined by acoustic sensors positioned at each of the working chambers. The control unit is operable to receive and to distinguish acoustic data characteristics of an active cycle of a working chamber from acoustic data characteristics of an ideal cycle or acoustic data characteristics of one or more failure modes of a working chamber responding to either an active or an ideal cycle command signal including situations where valves to the high or low pressure manifolds fail to fully open or close.

WO 2011/104548A2 is similar to GB 2477996A and generalizes the teaching with respect to the working chamber status or fault detection means in that such a means is described to comprise one or more sensors of an output parameter of the fluid working machine, of an individual working chamber or of a group of working chambers or of the high/low pressure manifolds. The one or more sensors could be a pressure sensor operable to measure the pressure of working fluid received by or output by one or more working chambers or other types of sensors including the acoustic or vibration sensors.

EP 2631477A2 discloses a monitoring method in a system for a wind turbine generator in which an energy transmission efficiency in a monitoring object part located on an energy transmission pathway from a rotor to a generator (which can be a hydraulic transmission) is calculated from input energy and output energy to the monitoring object part and temporal changes of the energy transmission efficiency are obtained from past calculated energy transmission efficiencies, all for the purpose of determining maintenance timing based on estimated energy transmission efficiencies.

### SUMMARY

In a hydraulic machine such as a hydraulic pump and a hydraulic motor, if abnormality (e.g. abnormality of the opening-closing timing of a valve) of the hydraulic machine occurs, the abnormality may cause deterioration in the performance of the hydraulic machine or damage to each part (e.g. valve) of the hydraulic machine.

To prevent such problems in advance, it is important to detect abnormality in the hydraulic machine before occurrence of deterioration in the performance of the hydraulic machine or damage to each part of the hydraulic machine.

In this regard, US 2010/0040470A and WO 2011/104547A scarcely describe a specific approach for precisely diagnosing abnormality (e.g. abnormality related to the opening-closing timing of the valve) of the hydraulic machine.

In view of the above issue, an object of at least one embodiment of the present invention is to provide a diagnosis system of a hydraulic machine, a hydraulic machine, a wind turbine power generating apparatus, and a method of diagnosing a hydraulic machine whereby it is possible to diagnose abnormality of the hydraulic machine precisely.

(1) A diagnosis system of a hydraulic machine according to the present invention has the features of claim 1, the hydraulic machine including a rotation shaft, a cylinder, a piston forming a working chamber together with the cylinder, and a high-pressure valve and a low-pressure valve provided for the working chamber, the hydraulic machine being configured to perform conversion between rotational motion of the rotation shaft and reciprocating motion of the piston. The diagnosis system comprises: a pressure sensor for measuring a pressure in the working chamber; and a first abnormality determination part for determining an abnormality of the hydraulic machine on the basis of a measurement result obtained by the pressure sensor. At least one valve between the high-pressure valve and the low-pressure valve is configured such that a valve body is movable, by supply control of excitation current, between a normal position at which the at least one valve is not supplied with the excitation current and an excitation position at which the at least one valve is supplied with the excitation current, and the first abnormality determination part is configured to determine an abnormality of the hydraulic machine on the basis of the measurement result obtained by the pressure sensor when the at least one valve is not supplied with the excitation current.

A pressure in a working chamber (hereinafter, also referred to as "chamber pressure") changes in accordance with opening and closing of the high-pressure valve and the low-pressure valve, and with the reciprocating motion of the piston. Thus, the chamber pressure fluctuates cyclically during normal operation of a hydraulic machine. The cyclic change of the chamber pressure is achieved by controlling the high-pressure valve or the low-pressure valve. Specifically, in a case where the high-pressure valve or the low-pressure valve is a valve in which the position of a valve body is controlled to switch between a normal position (open position or closed position) and an excitation position by supply control of excitation current, the chamber pressure fluctuates cyclically by controlling the supply of the excitation current to open or close the valve so that the hydraulic machine performs required motion.

In this case, when the high-pressure valve or the low-pressure valve is not supplied with the excitation current, the valve body is normally at the normal position due to a biasing force applied to the valve body. However, if a force in a direction opposite to that of the biasing force acts on the valve body due to some reason, a phenomenon such that valve body gets fixed to the excitation position even when not supplied with the excitation current may occur. If the motion of the valve is different from desired motion as described above, the pressure in the working chamber changes in a manner different from the above described cyclic pressure fluctuation. Thus, when the high-pressure valve or the low-pressure valve is not supplied with the excitation current and if the pressure in the working chamber has a manner different from that in normal operation, it may be considered that abnormality is occurring in the hydraulic machine.

With the above diagnosis system (1), since it is possible to determine abnormality of the hydraulic machine on the basis of a measurement result obtained by the pressure sensor when the high-pressure valve or the low-pressure valve is not supplied with the excitation current using the first abnormality determination part, it is possible to diagnose abnormality of the high-pressure valve precisely.

(2) In some embodiments, in the above configuration (1), the low-pressure valve is a normally-open solenoid valve configured to be open when the low-pressure valve is not supplied with the excitation current and the valve body is at the normal position, and the first abnormality determination part is configured to detect an abnormality of the hydraulic machine on the basis of whether a period during which the pressure in the working chamber is at least a second threshold continues for at least a predetermined period T₁ while the excitation current supplied to the low-pressure valve is at most a first threshold and during one revolution of the rotation shaft.

If the low-pressure valve that should be normally open closes due to some reason while the low-pressure valve, which is a solenoid valve of normally-open type, is not supplied with excitation current (during non-supply time), the pressure in the working pressure increases because the low-pressure line and the working chamber are not in communication in a period during which the low-pressure valve should normally open so that the low-pressure line and the working chamber are in communication.

With the above configuration (2), it is possible to detect abnormality of a hydraulic machine precisely on the basis of whether a period during which the excitation current to the low-pressure valve is at most the first threshold ("non-supply time" of the excitation current) and the pressure in the working chamber is at least a second threshold (the working chamber has a relatively high pressure) continues for at least a predetermined period T₁.

(3) In some embodiments, in the above configuration (1), the predetermined period T₁ satisfies a relationship represented by 0.15T* ≤ T₁ ≤ 0.25T*, where T* = 60/ω_{rated}, and ω_{rated} is a rated rotation speed (rpm) of the hydraulic machine.

The inventors found that abnormality is occurring in the hydraulic machine when the excitation current to the low-pressure valve is at most the first threshold (non-supply time) and a period during which the pressure in the working chamber is at least the second threshold (a period during which the working chamber has a relatively high pressure) continues for at least a period T₁ satisfying a relationship represented by 0.15T* ≤ T₁ ≤ 0.25T* where T* is a rotation cycle at a rated rotation speed ω of the hydraulic machine. With the above configuration (3), it is possible to detect abnormality of the hydraulic machine on the basis of the predetermined period T₁ satisfying a relationship represented by 0.15T* ≤ T₁ ≤ 0.25T* where T* is a rotation cycle at a rated rotation speed ω of the hydraulic machine.

(4) In some embodiments, in the above configuration (2) or (3), the first abnormality determination part is configured to obtain a length of a period during which the pressure in the working chamber is at least the second threshold, on the basis of an increase time point and a decrease time point of the pressure in the working chamber..

In the above configuration (4), the length of the period during which the pressure in the working chamber is relatively high is obtained on the basis of the increase time point and the decrease time point of the pressure. Thus, a revolution indicator is unnecessary, unlike a case where the length of the period during which the pressure in the working chamber is relatively high is obtained on the basis of an absolute phase (rotation angle) of the rotation shaft. Further, since a revolution indicator is unnecessary, it is not necessary to take into account a trouble such as an error of a revolution indicator. Thus, with the above configuration (4), it is possible to detect abnormality of the hydraulic machine easily and accurately.

(5) In some embodiments, in any of the above configurations (1) to (4), the first abnormality determination part is configured to determine an abnormality mode from among a plurality of abnormality modes of the hydraulic machine on the basis of whether a period during which the pressure in the working chamber is at most a third threshold continues for at least a predetermined time T₂ during one revolution of the rotation shaft.

Among a plurality of abnormality modes of the hydraulic machine the pressure in the working chamber may have a similar manner when the hydraulic machine or the low-pressure valve is not supplied with excitation current. For instance, the pressure in the working chamber may increase when the low-pressure valve, which is a normally-open solenoid valve, is not supplied with excitation current, due to a failure of the low-pressure valve and also due to a failure of the high-pressure valve. The above two cases are different in the length of the period during which the working chamber has a relatively low pressure during one revolution of the rotation shaft.

With the above configuration (5), it is possible to determine an abnormality mode of the hydraulic machine precisely on the basis of whether a period during which the pressure in the working chamber is at most the third threshold (the working chamber has a relatively low pressure) during one revolution of the rotation shaft continues for at least the predetermined time T₂, before period in which a period during which the excitation current to the low-pressure valve is at most the first threshold and the pressure in the working chamber is at least the second threshold during one revolution of the rotation shaft continues for the predetermined period T¹, for instance.

(6) In some embodiments, in the above configuration (5), the high-pressure valve is a normally-closed solenoid valve, the low-pressure valve is a normally-open solenoid valve, and the first abnormality determination part is configured to determine whether the abnormality mode of the hydraulic machine is a second abnormality mode in which the low-pressure valve fails to open due to a delay in a closing timing of the high-pressure valve, or a first abnormality mode in which the low-pressure valve opens due to a closure of the high-pressure valve at an appropriate timing, but the valve body of the low-pressure valve closes even when the low-pressure valve is not supplied with the excitation current.

With the above configuration (6), it is possible to determine different abnormality modes on the basis of a measurement result obtained by the pressure sensor when at least one of the high-pressure valve or the low-pressure valve is not supplied with the excitation current.

(7) In some embodiments, in the above configuration (5) or (6), the predetermined period T₂ satisfies a relationship represented by 0.25T* ≤ T₂ ≤ 0.45T*, where T* = 60/ω_{reted}, and ω_{rated} is a rated rotation speed (rpm) of the hydraulic machine.

The inventors found that the above first abnormality mode is occurring when a period during which the pressure in the working chamber is at most the third threshold (a period during which the working chamber has a relatively low pressure) continues for at least a period T₂ satisfying a relationship represented by 0.25T* ≤ T₂ ≤ 0.45T* where T* at a rated rotation speed ω of the hydraulic machine, during one revolution of the rotation shaft. With the above configuration (7), it is possible to determine different abnormality modes precisely on the basis of the period T₂ satisfying a relationship represented by 0.25T* ≤ T₂ ≤ 0.45T* where T* is a rotation cycle at a rated rotation speed ω of the hydraulic machine.

(8) In some embodiments, in any one of the above configurations (1) to (7), the diagnosis system for a hydraulic machine further comprises a second abnormality determination part configured to shift a supply-start timing or a supply-stop timing of the excitation current supplied to the at least one valve within a predetermined range, and to determine an abnormality of the hydraulic machine on the basis of an influence of the supply-start timing or the supply-halt timing on the pressure in the working chamber.

When the supply-start timing or the supply-stop timing of the excitation current to the high-pressure valve or the low-pressure valve is shifted, the opening-closing manner of the high-pressure valve or the low-pressure valve should change, and the manner of the chamber pressure should also change. The principle of the above configuration (8) for determining abnormality is based on this premise.

That is, in the above configuration (8), with the predetermined range of the supply-start timing or the supply-stop timing of the excitation current set within a range such that a predetermined change appears in a manner of the chamber pressure, it is possible to determine abnormality of the hydraulic machine on the basis of whether the manner of the chamber pressure shows a predicted change when the supply-start timing or the supply-stop timing of the excitation current is shifted in the predetermined range. In this case, it is possible to determine that abnormality of the hydraulic machine is occurring if the manner of the chamber pressure does not show a predicted change even if the supply-start timing or the supply-stop timing of the excitation current to the high-pressure valve or the low-pressure valve is shifted within a predetermined range.

With the above configuration (8), it is possible to detect abnormality of the hydraulic machine by both of the first abnormality determination part and the second abnormality determination part, which improves the reliability of the abnormality determination of the hydraulic machine.

(9) In some embodiments, in the above configuration (8), the high-pressure valve is a normally-closed solenoid valve, the low-pressure valve is a normally-open solenoid valve, and the second abnormality determination part is configured to determine an abnormality of the hydraulic machine on the basis of a manner of a change in the pressure in the working chamber at the time when the supply-start timing of the excitation current to the low-pressure valve is retarded to a limit of the predetermined range toward a point of time at which the piston reaches the top dead center.

When the supply-start timing of the excitation current to the low-pressure valve is shifted, the opening-closing manner of the low-pressure valve should change, and the manner of the chamber pressure should also change. The principle of the above configuration (9) for determining abnormality is based on this premise.

That is, in the above configuration (9), with the predetermined range of the supply-start timing of the excitation current set within a range such that a predetermined change appears in a manner of the chamber pressure, it is possible to determine abnormality of the hydraulic machine on the basis of whether the manner of the chamber pressure shows a predicted change when the supply-start timing of the excitation current is shifted in the predetermined range. In this case, it is possible to determine that abnormality of the hydraulic machine is occurring if the manner of the chamber pressure does not show a predicted change even if the supply-start timing of the excitation current to the low-pressure valve is shifted within a predetermined range.

(10) In some embodiments, in any of the above configurations (1) to (9), the low-pressure valve is a normally-open solenoid valve configured to open when the low-pressure valve is not supplied with the excitation current and the valve body is at the normal position. The first abnormality determination part is configured to determine that an abnormality is occurring in the hydraulic machine when a continuous occurrence number N₁ or a cumulative occurrence number N₂ (where N₂ > N₁) of an event is greater than a threshold, the event being such that the period during which the pressure in the working chamber is at least the second threshold continues for at least the predetermined period T₁ while the excitation current to the low-pressure valve is at most the first threshold and during one revolution of the rotation shaft.

With the above configuration (10), it is possible to detect abnormality of the hydraulic machine effectively in both of low-load operation and high-load operation of the hydraulic machine by using the more advantageous determination basis from among the continuous occurrence number N₁ and the cumulative occurrence number N₂, in accordance with the load state of the hydraulic machine.

(11) A hydraulic machine according to at least one embodiment of the present invention comprises the diagnosis system with the configuration according to any one of the above (1) to (10).

A pressure in a working chamber (chamber pressure) changes in accordance with opening and closing of the high-pressure valve and the low-pressure valve, and with the reciprocating motion of the piston. Thus, a chamber pressure fluctuates cyclically during normal operation of a hydraulic machine. The cyclic change of the chamber pressure is achieved by controlling the high-pressure valve or the low-pressure valve. Specifically, in a case where the high-pressure valve or the low-pressure valve is a valve in which the position of a valve body is controlled to switch between a normal position (open position or closed position) and an excitation position by a supply control of excitation current, the chamber pressure fluctuates cyclically by controlling the supply of the excitation current to open or close the valve so that the hydraulic machine performs required motion.

In this case, when the high-pressure valve or the low-pressure valve is not supplied with the excitation current (non-supply time), the valve body is normally at the normal position due to a biasing force applied to the valve body. However, if a force in a direction opposite to that of the biasing force acts on the valve body due to some reason, a phenomenon such that valve body gets fixed to the excitation position even when not supplied with the excitation current may occur. If the motion of the valve is different from desired motion, the pressure in the working chamber changes in a manner different from the above described cyclic pressure fluctuation. Thus, when the high-pressure valve or the low-pressure valve is not supplied with the excitation current and if the pressure in the working chamber has a manner different from that in normal operation, it may be considered that abnormality is occurring in the hydraulic machine.

With the above configuration (11), since it is possible to determine abnormality of the hydraulic machine on the basis of a measurement result obtained by the pressure sensor when at least one of the high-pressure valve or the low-pressure valve is not supplied with the excitation current using the first abnormality determination part, it is possible to diagnose abnormality of the high-pressure valve precisely.

(12) A wind turbine power generating apparatus according to at least one embodiment of the present invention comprises: a rotor configured to rotate by receiving wind; a hydraulic pump configured to be driven by the rotor to generate pressurized oil; and a hydraulic motor driven by the pressurized oil. At least one of the hydraulic pump or the hydraulic motor comprises the hydraulic machine having the configuration according to the above (11).

A pressure in a working chamber (chamber pressure) changes in accordance with opening and closing of the high-pressure valve and the low-pressure valve, and with the reciprocating motion of the piston. Thus, a chamber pressure fluctuates cyclically during normal operation of a hydraulic machine. The cyclic change of the chamber pressure is achieved by controlling the high-pressure valve or the low-pressure valve. Specifically, in a case where the high-pressure valve or the low-pressure valve is a valve in which the position of a valve body is controlled to switch between a normal position (open position or closed position) and an excitation position by supply control of excitation current, the chamber pressure fluctuates cyclically by controlling the supply of the excitation current to open or close the valve so that the hydraulic machine performs required motion.

In this case, when the high-pressure valve or the low-pressure valve is not supplied with the excitation current, the valve body is normally at the normal position due to a biasing force applied to the valve body. However, if a force in a direction opposite to that of the biasing force acts on the valve body due to some reason, a phenomenon such that valve body gets fixed to the excitation position even when not supplied with the excitation current may occur. If the motion of the valve is different from desired motion, the pressure in the working chamber changes in a manner different from the above described cyclic pressure fluctuation. Thus, when the high-pressure valve or the low-pressure valve is not supplied with the excitation current and if the pressure in the working chamber has a manner different from that in normal operation, it may be considered that abnormality is occurring in the hydraulic machine,.

With the above configuration (12), since it is possible to determine abnormality of the hydraulic machine on the basis of a measurement result obtained by the pressure sensor when the high-pressure valve or the low-pressure valve is not supplied with the excitation current using the fist abnormality determination part, it is possible to diagnose abnormality of the high-pressure valve precisely.

(13) In some embodiments, in the above configuration (12), the rotor includes a hub and at least one blade mounted to the hub, and the wind turbine power generating apparatus further comprises: a pitch drive for adjusting a pitch angle of the at least one blade; and a controller configured to control the hydraulic machine so that a displacement of the hydraulic machine decreases and control the pitch drive so that wind energy to be extracted by the at least one blade decreases, if the first abnormality determination part detects an abnormality of the hydraulic machine.

With the above configuration (13), the displacement of the hydraulic machine is gradually decreased as compared to a case where it is reduced to zero at once, which makes it possible to stop the wind turbine power generating apparatus while protecting the constituent members (e.g. the valves) of the hydraulic machine.

(14) A method of diagnosing a hydraulic machine according to claim 14 of the present invention is for a hydraulic machine including a rotation shaft, a cylinder, a piston forming a working chamber together with the cylinder, and a high-pressure valve and a low-pressure valve provided for the working chamber, the hydraulic machine being configured to perform conversion between rotational motion of the rotation shaft and reciprocating motion of the piston. The method comprises: a pressure-measuring step of measuring a pressure in the working chamber; and a first abnormality determination step of determining an abnormality of the hydraulic machine on the basis of a measurement result obtained in the pressure-measuring step. At least one valve between the high-pressure valve and the low-pressure valve is configured such that a valve body is movable, by supply control of excitation current, between a normal position at which the at least one valve is not supplied with the excitation current and an excitation position at which the at least one valve is supplied with the excitation current. The first abnormality determination step comprises determining an abnormality of the hydraulic machine on the basis of the measurement result obtained in the pressure-measuring step when the at least one valve is not supplied with the excitation current.

A pressure in a working chamber (chamber pressure) changes in accordance with opening and closing of the high-pressure valve and the low-pressure valve, and with the reciprocating motion of the piston. Thus, a chamber pressure fluctuates cyclically during normal operation of a hydraulic machine. The cyclic change of the chamber pressure is achieved by controlling the high-pressure valve or the low-pressure valve. Specifically, in a case where the high-pressure valve or the low-pressure valve is a valve in which the position of a valve body is controlled to switch between a normal position (open position or closed position) and an excitation position by supply control of excitation current, the chamber pressure fluctuates cyclically by controlling the supply of the excitation current to open or close the valve so that the hydraulic machine performs required motion.

In this case, when the high-pressure valve or the low-pressure valve is not supplied with the excitation current, the valve body is normally at the normal position due to a biasing force applied to the valve body. However, if a force in a direction opposite to that of the biasing force acts on the valve body due to some reason, a phenomenon such that valve body gets fixed to the excitation position even when not supplied with the excitation current may occur. If the motion of the valve is different from desired motion, the pressure in the working chamber changes in a manner different from the above described cyclic pressure fluctuation. Thus, when the high-pressure valve or the low-pressure valve is not supplied with the excitation current and if the pressure in the working chamber has a manner different from that in normal operation, it may be considered that abnormality is occurring in the hydraulic machine.
With the above method (14), since it is possible to determine abnormality of the hydraulic machine on the basis of a measurement result obtained by the pressure sensor when the high-pressure valve or the low-pressure valve is not supplied with the excitation current, it is possible to diagnose abnormality of the hydraulic machine precisely.

According to at least one embodiment of the present invention, a diagnosis system for a hydraulic machine, a hydraulic machine, a wind turbine power generating apparatus, and a method of diagnosing a hydraulic machine whereby it is possible to diagnose abnormality of the hydraulic machine precisely are provided.

### BRIEF DESCRIPTION OF DRAWINGS

FIG. 1 is a schematic diagram of a wind turbine power generating apparatus according to one embodiment.
FIG. 2 is a schematic diagram illustrating a configuration of a diagnosis system for a hydraulic motor (hydraulic machine) according to one embodiment.
FIG. 3 is a schematic diagram of a diagnosis system for a hydraulic motor (hydraulic machine) according to one embodiment.
FIG. 4 is a schematic cross-sectional view of a configuration of a high-pressure valve and a low-pressure valve.
FIG. 5 is a schematic cross-sectional view of a configuration of a high-pressure valve and a low-pressure valve.
FIG. 6 is a diagram for describing open/close control of a high-pressure valve and a low-pressure valve.
FIGs. 7A and 7B are graphs showing a change in the electric current of a low-pressure valve and the chamber pressure during normal operation of a hydraulic motor, and FIGs. 7C and 7D are graphs showing a change in the electric current of a low-pressure valve and the chamber pressure when abnormality is occurring in the hydraulic motor.
FIG. 8 is a flowchart showing an example of a process for determining abnormality by the first abnormality determination part.
FIG. 9A is a graph showing a change in the chamber pressure during normal operation of the hydraulic motor, and FIG. 9B is a graph showing a change in the chamber pressure when there is a latch failure in the hydraulic motor.
FIG. 10 is a configuration example of a pitch drive according to one embodiment.

### DETAILED DESCRIPTION

Embodiments of the present invention will now be described in detail with reference to the accompanying drawings.

In the following embodiment, the hydraulic machine according to one embodiment of the present invention will be described, referring to a hydraulic motor of a hydraulic transmission constituting a drive train of a wind turbine power generating apparatus as an example. However, a hydraulic machine is not limited to the example herein, and may be a hydraulic pump or a hydraulic motor to be applied to a certain usage.

First, an overall configuration of a wind turbine power generating apparatus will be described. The wind turbine power generating apparatus includes a hydraulic machine (hydraulic motor) to which the diagnosis system and method according to one embodiment are to be applied.

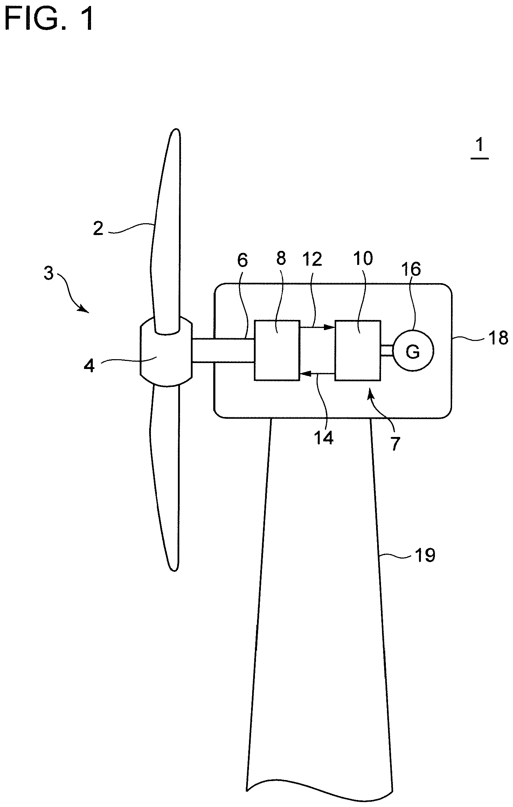

FIG. 1 is a schematic diagram of a wind turbine power generating apparatus according to one embodiment. As illustrated in the drawing, the wind turbine power generating apparatus 1 includes a rotor 3 configured to rotate by receiving wind, a hydraulic transmission 7 for transmitting rotation of the rotor 3, a generator 16 for generating electric power.

The rotor 3 includes at least one blade 2, and a hub 4 to which the at least one blade 2 is mounted.

The hydraulic transmission 7 includes a hydraulic pump 8 connected to the rotor 3 via a rotation shaft 6, a hydraulic motor 10, and a high-pressure line 12 and a low-pressure line 14 connecting the hydraulic pump 8 and the hydraulic motor 10.

The generator 16 is coupled to the hydraulic motor 10 via an output shaft of the hydraulic motor 10. In one embodiment, the generator 16 is a synchronous generator connected to a utility grid and driven by the hydraulic motor 10.

The hydraulic pump 8, the hydraulic motor 10, and the generator 16 may be disposed inside a nacelle 18 disposed on a tower 19.

In the wind turbine power generating apparatus 1 illustrated in FIG. 1, the rotation energy of the rotor 3 is inputted into the generator 16 via the hydraulic transmission 7 including the hydraulic pump 8 and the hydraulic motor 10, and electric power is generated by the generator 16.

When the at least one blade 2 receives wind, the entire rotor 3 rotates by the power of the wind, so that the hydraulic pump 8 is driven by the rotor 3 to pressurize working oil, thereby producing high-pressure working oil (pressurized oil). The pressurized oil produced by the hydraulic pump 8 is supplied to the hydraulic motor 10 via the high-pressure line 12, and drives the hydraulic motor 10. Electric power is generated by the generator 16 connected to the hydraulic motor 10 via the output shaft. The low-pressure working oil having performed work in the hydraulic motor 10 flows again into the hydraulic pump 8 via the low-pressure line 14.

The hydraulic pump 8 and the hydraulic motor 10 may be of variable-displacement type whereby the displacement is adjustable.

Next, a system and a method of diagnosing a hydraulic machine according to one embodiment will be described.

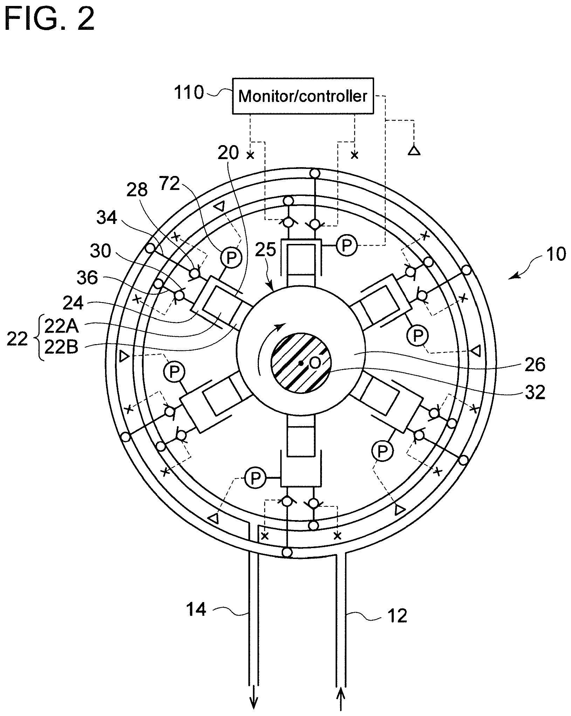

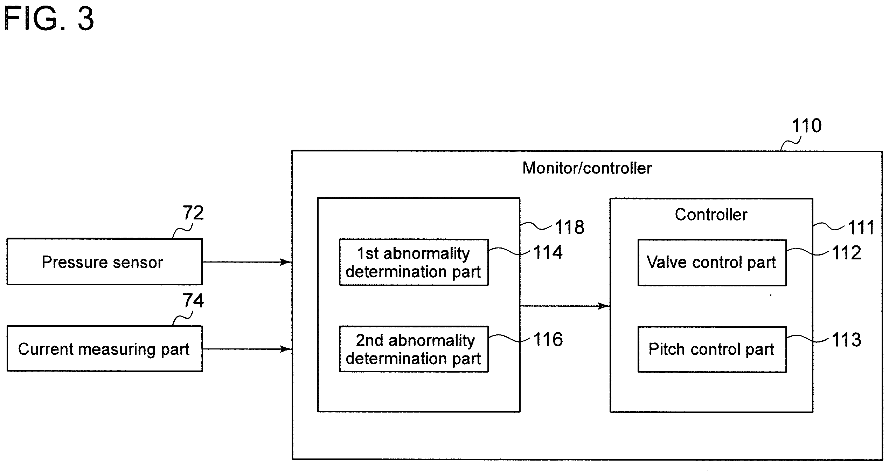

FIGs. 2 and 3 are each a schematic diagram of a diagnosis system for a hydraulic motor (hydraulic machine) according to one embodiment.

As illustrated in FIG. 2, the hydraulic motor 10 to be diagnosed by the diagnosis system and method according to one embodiment includes a rotation shaft 32, a cylinder 20, a piston 22 which forms a working chamber 24 with the cylinder 20, and a high-pressure valve 28 and a low-pressure valve 30 provided for the working chamber 24, and a cam 26 (conversion mechanism) for performing conversion between the reciprocating motion of the piston 22 and the rotational motion of the rotation shaft 32. The cam 26 has a cam curved surface configured to contact the piston 22.

The piston 22 preferably includes a piston body portion 22A which slides inside the cylinder 20, and a piston roller or a piston shoe which is attached to the piston body portion 22A and which contacts the cam curved surface of the cam 26, from the perspective of smoothly converting the reciprocating motion of the piston 22 into the rotational motion of the rotation shaft 32. In the example illustrated in FIG. 2, the piston 22 includes a piston body portion 22A and a piston shoe 22B.

The cam 26 is an eccentric cam disposed eccentrically from the axial center O of the rotation shaft (crank shaft) 32 of the hydraulic motor 10. While the piston 22 performs a set of upward and downward movement, the cam 26 and the rotation shaft 32 to which the cam 26 is mounted perform one revolution.

In another embodiment, the cam 26 is an annular-shaped multi-lobed cam (ring cam) with a plurality of lobes. In this case, while the cam 26 and the rotation shaft 32 to which the cam 26 is mounted perform one revolution, the piston 22 performs as many sets of upward and downward movement as the number of lobes.

The high-pressure valve 28 is disposed in a high-pressure communication line 34 between the working chamber 24 and the high-pressure line 12 disposed outside the working chamber 24, and configured to be capable of switching the communication state between the working chamber 24 and the high-pressure line 12. The low-pressure valve 30 is disposed in a low-pressure communication line 36 between the working chamber 24 and the low-pressure line 14 disposed outside the working chamber 24, and configured to be capable of switching the communication state between the working chamber 24 and the low-pressure line 14.

A diagnosis system 70 of the hydraulic motor 10 illustrated in FIGs. 2 and 3 includes a monitor/controller 110 for controlling and monitoring the operation state of a device (e.g. the high-pressure valve 28 and the low-pressure valve 30) constituting the hydraulic motor 10, or an instrument (e.g. the pressure sensor 72 described below).

The monitor/controller 110 includes an abnormality determination part 118 for determining abnormality of the hydraulic motor 10 (hydraulic machine) and a controller 111 for controlling a device constituting the hydraulic motor 10.

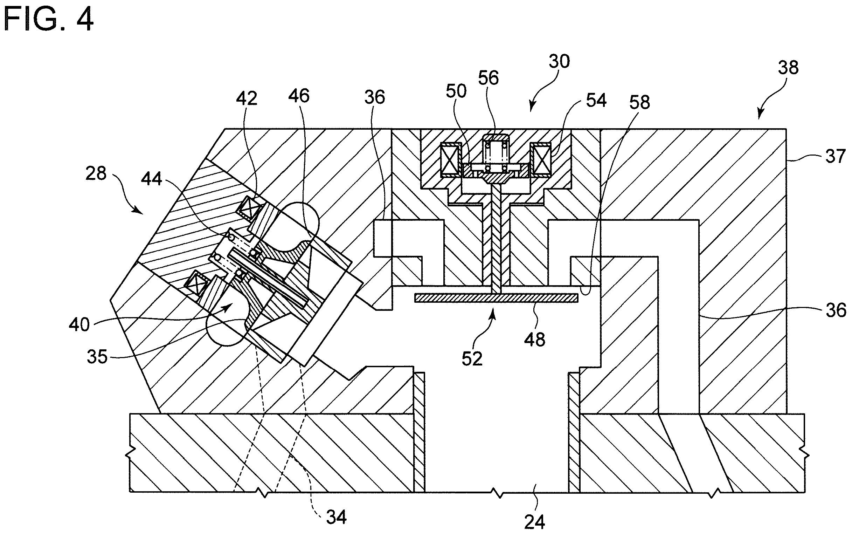

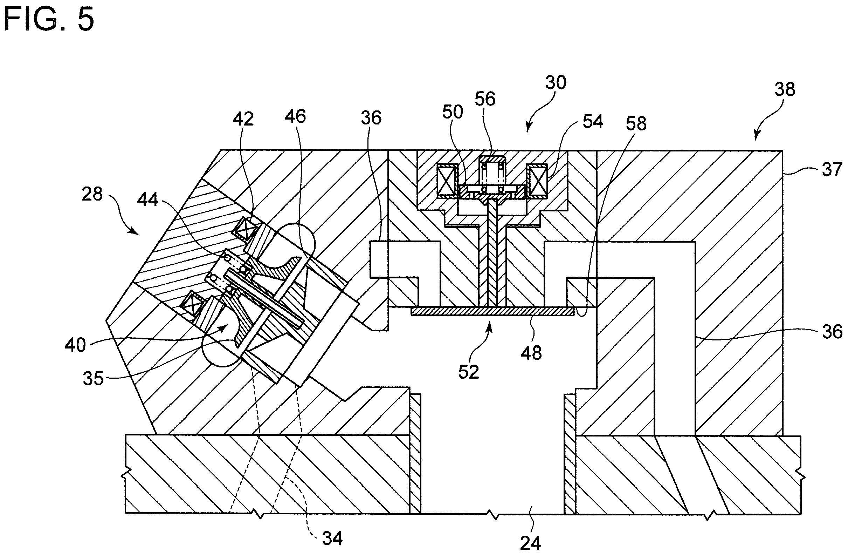

Now, the configuration of the high-pressure valve 28 and the low-pressure valve 30 will be described with reference to FIGs. 4 and 5.

FIGs. 4 and 5 are each a schematic cross-sectional view of the configuration of the high-pressure valve 28 and the low-pressure valve 30. FIG. 4 illustrates a situation where the high-pressure valve 28 is closed and the low-pressure valve 30 is open, while FIG. 5 illustrates a situation where the high-pressure valve 28 is open and the low-pressure valve 30 is closed. In some embodiments, the high-pressure valve 28, the low-pressure valve 30, and a casing 37 of the valves may be unitized and configured as a valve unit 38, as illustrated in FIGs. 4 and 5.

The high-pressure valve 28 and the low-pressure valve 30 are controlled to open and close by a valve control part 112 (see FIG. 3) that the controller 111 includes. The valve control part 112 controls the opening-closing motion of the high-pressure valve 28 by applying a HPV control signal (opening-closing command for the high-pressure valve 28) to the high-pressure valve 28, and controls the opening-closing motion of the low-pressure valve 30 by applying a LPV control signal (opening-closing command for the low-pressure valve 30) to the low-pressure valve 30.

The high-pressure valve 28 illustrated in FIGs. 4 and 5 includes a movable unit 40 including a valve body 35, a solenoid coil 42 that functions as an actuator for moving the movable unit 40 between a valve-open position and a valve-closed position, a spring 44, and a valve seat 46. The high-pressure valve 28 is a poppet solenoid valve of normally-closed type, with the valve seat 46 disposed on a side adjacent to the working chamber 24 with respect to the valve body 35. The high-pressure valve 28 is capable of switching the communication state between the working chamber 24 and the high-pressure line 12 (see FIG. 12) by movement of the movable unit 40 caused by the electromagnetic force of the solenoid coil 42 or the biasing force of the spring 44.

When the high-pressure valve 28 is not excited by the HPV control signal from the valve control part 112, the movable unit 40 is biased toward the valve seat 46 by the spring 44, so as to be retained in a position such that the working chamber 24 and the high-pressure line 12 are not in communication (normal position; the position of the movable unit 40 in FIG. 4). When the high-pressure valve 28 is excited by the HPV control signal from the valve control part 112, the movable unit 40 moves to a position such that the working chamber 24 and the high-pressure line 12 communicate with each other by the electromagnetic force, against the biasing force of the spring 44 (excitation position; the position of the movable unit 40 in FIG. 5). In other words, the high-pressure valve 28 is configured such that the valve body is movable by the supply control of the excitation current, between the normal position where the excitation current is not supplied and the excitation position where the excitation current is supplied.

The low-pressure valve 30 illustrated in FIGs. 4 and 5 includes a movable unit 52 including a valve body 48 and an armature 50, a solenoid coil 54, a spring 56, and a valve seat 58. The low-pressure valve 30 is a poppet solenoid valve of normally-open type, with the valve body 48 disposed on the side of the working chamber 24 with respect to the valve seat 58. The low-pressure valve 30 is capable of switching the communication state between the working chamber 24 and the low-pressure line 14 (see FIG. 2) by movement of the movable unit 52 caused by the electromagnetic force of the solenoid coil 54 or the biasing force of the spring 56.

When the low-pressure valve 30 is not excited by the LPV control signal from the valve control part 112, the movable unit 52 is biased in a direction away from the valve seat 58 by the spring 56, so as to be retained in a valve-open position such that the working chamber 24 and the low-pressure line 14 are in communication with each other (normal position; the position of the movable unit 52 in FIG. 4). When the low-pressure valve 30 is excited by the LPV control signal from the valve control part 112, the electromagnetic force of the solenoid coil 54 attracts the armature 50 and the movable unit 52 moves toward the valve seat 58 by the electromagnetic force against the biasing force of the spring 56, thereby moving to a valve-closed position such that the working chamber 24 and the high-pressure line 12 are not in communication (excitation position; the position of the movable unit 52 in FIG. 5). In other words, the low-pressure valve 30 is configured such that the valve body is movable by the supply control of the excitation current, between the normal position where the excitation current is not supplied and the excitation position where the excitation current is supplied.

As illustrated in FIGs. 2 and 3, the diagnosis system 70 of the hydraulic motor 10 includes a pressure sensor 72 for measuring a pressure of the working chamber 24. The signal representing the pressure of the working chamber 24 measured by the pressure sensor 72 is inputted to the monitor/controller 110. The measurement result obtained by the pressure sensor 72 is used by the abnormality determination part 118 to determine abnormality of the hydraulic motor 10. The abnormality determination part 118 includes the first abnormality determination part 114 and/or the second abnormality determination part described below. Further, a signal representing an electric-current value measured by an electric-current measuring part 74 for measuring a value of the excitation current supplied to the low-pressure valve 30 is inputted to the monitor/controller 110.

In a case where the hydraulic motor 10 includes a plurality of working chambers 24 formed by a plurality of cylinders 20 and pistons 22, each of the working chambers 24 may include the pressure sensor 72, as illustrated in FIG. 2. In this case, it is possible to determine abnormality for each cylinder 20 on the basis of a pressure measurement value, which makes it possible to determine in which one of the cylinder 20 abnormality is occurring.

The diagnosis system 70 of the hydraulic motor 10 includes the first abnormality determination part 1 14 for determining abnormality of the hydraulic machine on the basis of the measurement result of the pressure sensor 72.

The first abnormality determination part 114 determines abnormality of the hydraulic motor 10 on the basis of the measurement result obtained by the pressure sensor 72 when the low-pressure valve 30 is not supplied with the excitation current.

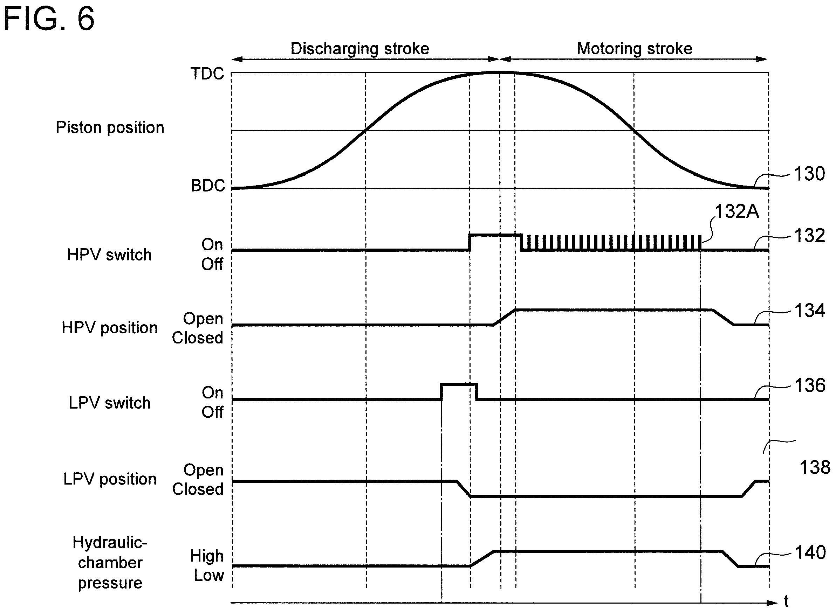

FIG. 6 is a diagram illustrating the opening-closing motion of the high-pressure valve 28 and the low-pressure valve 30 and a pressure fluctuation inside the working chamber 24 while the cylinder 20 performs an active cycle. An active cycle of the hydraulic motor 10 refers to a cycle in which pressurized oil from the hydraulic pump 8 performs a work to rotate the rotation shaft of the hydraulic motor 10 in the cylinder 20, i.e., a cycle in which the displacement of the working oil is generated.

In FIG. 6, the piston-cycle curve 130 is a curve representing a time-series change of the position of a piston 22, where the x-axis is time t. Further, in the drawing: an HPV control signal 132 represents a control signal to be supplied to the high-pressure valve 28; a high-pressure valve position 134 represents an open/closed state of the high-pressure valve 28; an LPV control signal 136 represents a control signal to be supplied to the low-pressure valve 30; a low-pressure valve position 138 represents an open/closed state of the low-pressure valve 30; and a pressure curve 140 represents a pressure in the working chamber 24.

In the hydraulic motor 10, as represented by the piston-cycle curve 130 in FIG. 6, the differential pressure between the high-pressure line 12 and the low-pressure line 14 created by the hydraulic pump 8 moves the pistons 22 upward and downward cyclically, so that each piston 22 repeats a discharging stroke of moving toward a top dead center from a bottom dead center and a motoring stroke of moving toward a bottom dead center from a top dead center.

The HPV control signal 132 is applied to the high-pressure valve 28 of normally-closed type. As represented by the HPV control signal 132 in FIG. 6, the high-pressure valve 28 is supplied with the excitation current immediately before the piston 22 reaches the top dead center, and thereby the high-pressure valve opens as represented by the high-pressure valve position 134.

Once the high-pressure valve 28 opens, the high-pressure fluid flows into the working chamber 24 to rotate the cam 26. To latch the high-pressure valve 28 in an open state, required is only a small force that overtakes a biasing force (a force acting in a direction to close the high-pressure valve 28) of the spring 44 of the high-pressure valve 28. Thus, after the piston 22 reaches the top dead center, repeating excitation and de-excitation of the high-pressure valve 28 at a high frequency makes it possible to latch the high-pressure valve 28 in an open state using little current. For instance, a signal having a duty ratio of 20 % and a cycle of 10kHz can be used. In this case, the pulse control signal given to the high-pressure valve 28 preferably has a higher frequency than that of the reciprocal number of a time constant of the coil of the high-pressure valve 28, from the perspective of securely maintaining the high-pressure valve 28 to be open.

The final pulse 132A of the high-frequency signal repeating excitation and de-excitation of the high-pressure valve 28 may be regarded as a control signal for switching the high-pressure valve 28 from an open state to a closed state.

Then, when the supply of the pulse voltage signal (PWM signal) for excitation and de-excitation of the high-pressure valve 28 is stopped, the high-pressure valve 28 closes due to a biasing force of the spring.

On the other hand, as to the low-pressure valve 30 of normally-open type, the low-pressure valve 30 is excited (closed) immediately before the piston 22 reaches the top dead center, and then the high-pressure valve 28 is excited (opened), so that the low-pressure valve 30 is maintained to be closed by the differential pressure between the opposite sides of the valve body 48. As can be seen from the low-pressure valve position 138, the low-pressure valve 30 is closed by being excited immediately before the piston 22 reaches the top dead center.

Further, the low-pressure valve 30 is maintained to be closed by the differential pressure between the working chamber 24 and the low-pressure line 14 even if the low-pressure valve 30 is closed by excitation and then de-excited before the piston 22 reaches the top dead center, because the pressure in the working chamber 24 is high (see the pressure curve 140) during a period during which the piston 22 moves toward the top dead center (a period in the discharging stroke after the low-pressure valve 98 is closed). Then, when the piston 22 reaches the top dead center and the cycle advances to the motoring stroke, the high-pressure oil flows into the working chamber 24 via the high-pressure valve 28, and the pressure in the working chamber 24 is maintained to be high, which leaves the low-pressure valve 98 closed by the differential pressure between the working chamber 24 and the low-pressure line 14.

Then, when the supply of the pulse voltage signal (PWM signal) to the high-pressure valve 28 is stopped immediately before the piston 22 reaches the bottom dead center, the high-pressure valve 28 closes and the pressure in the working chamber 24 decreases, with the working chamber 24 continuously expanding. As a result, the differential pressure between the working chamber 24 and the low-pressure line 14 becomes small, and thereby the low-pressure valve 30 automatically opens.

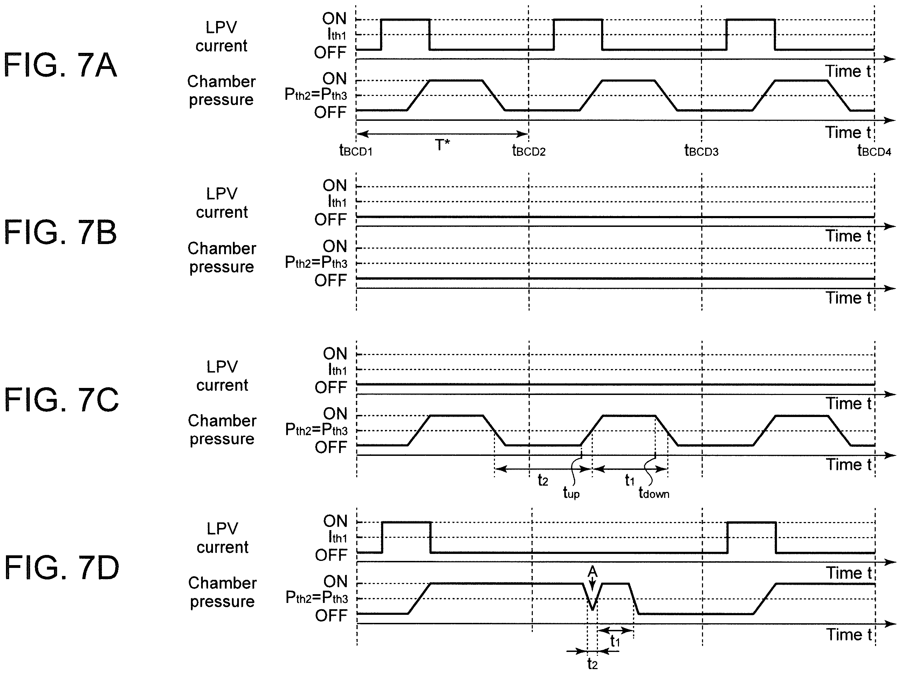

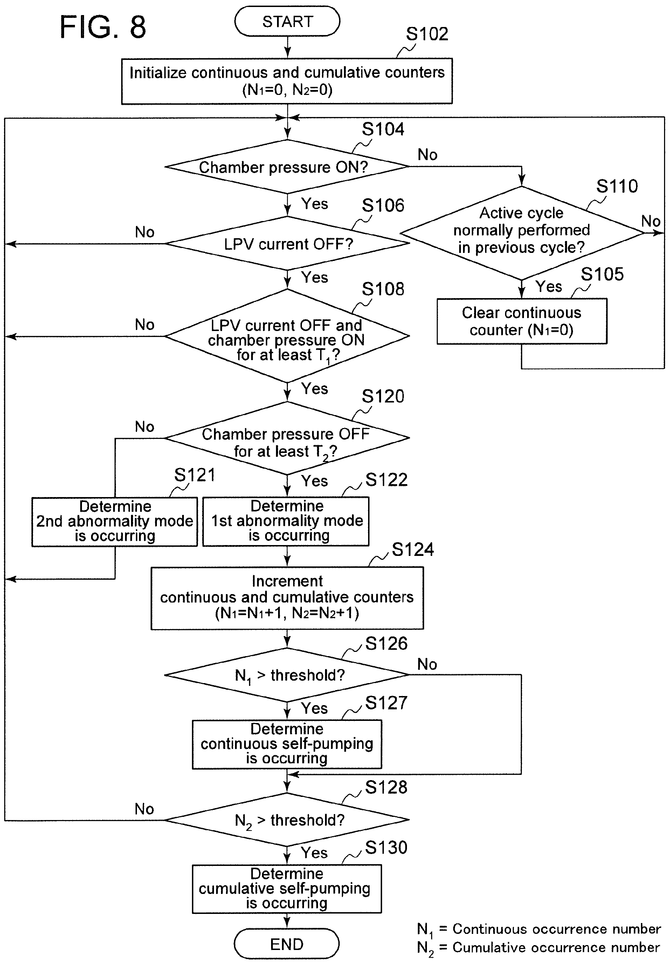

Next, with reference to FIGs. 7 and 8, the abnormality determination of the hydraulic motor 10 performed by the first abnormality determination part 114 according to one embodiment will be described. FIGs. 7A to 7D are each a schematic graph showing a change in the excitation current to the low-pressure valve 30 over time t, and a measurement result (i.e., a change in the pressure inside the working chamber 24, which is a chamber pressure) obtained by the pressure sensor 72 corresponding to the same. FIG. 7A illustrates a case in which the cylinder is performing an active cycle while the hydraulic motor 10 is in normal operation. FIG. 7B illustrates a case in which the cylinder is performing an inactive cycle while the hydraulic motor 10 is in normal operation. In both of FIGs. 7C and 7D, abnormality is occurring in the hydraulic motor 10. FIG. 7C illustrates a case in which the self-pumping described below is occurring, and FIG. 7D illustrates a case in which the juddering described below is occurring.

In the graphs, "low-pressure valve(LPV) current" of y-axis represents the magnitude of the excitation current to the low-pressure valve 30. "ON" refers to the excitation current when the excitation current is supplied to the low-pressure valve 30, and "OFF" to that when the excitation current is not supplied. Further, "chamber pressure" of y-axis represents the magnitude of the pressure inside the working chamber 24. "ON" refers to the pressure inside the working chamber 24 being close to the pressure of the high-pressure line 12, which is relatively high, and "OFF" to that being close to the pressure of the low-pressure line 14, which is relatively low.

Further, t_{BDC1}, t_{BDC2}, and the like of x-axis represent the time points at which the piston 22 passes through the bottom dead center. Specifically, a period from t_{BDC1} to t_{BDC2} and a period from t_{BDC2} to t_{BDC3} correspond to a rotational cycle T* of the rotation shaft 32, which is a cycle of the reciprocating motion of the piston 22.

FIG. 8 is a flowchart illustrating an example of a process for determining abnormality of the hydraulic motor 10 (hydraulic machine) by the first abnormality determination part 114 according to one embodiment.

In FIG. 8, "chamber pressure ON" refers to when the chamber pressure is at least a threshold, "chamber pressure OFF" to when the chamber pressure is less than the threshold, and "low-pressure valve (LPV) current OFF" to when the excitation current to the low-pressure valve 30 is at most a threshold.

As described above, in the active cycle of the cylinder during normal operation of the hydraulic motor 10, the high-pressure valve 28 and the low-pressure valve 30 are repetitively excited and de-excited in relation to the reciprocating cycle of the piston 22, so that the pressure inside the working chamber 24 changes cyclically. The cyclic change of the excitation current to the low-pressure valve 30 and the chamber pressure is, for instance, as illustrated in FIG. 7A.

On the other hand, while the hydraulic motor 10 is in normal operation, in the inactive cycle in which the displacement is not generated in the cylinder 20, the high-pressure valve 28 and the low-pressure valve 30 are both in a de-excited state, in which the high-pressure valve 28 is constantly closed and the low-pressure valve 30 is constantly open, so that the working chamber 24 is in communication with the low-pressure line 14. Thus, the pressure inside the working chamber 24 is relatively low (which may be substantially the same as the pressure of the low-pressure line 14) throughout a cycle (the rotation cycle of the rotation shaft 32) of the cylinder 20. In this case, the change of the excitation current to the low-pressure valve 30 and the chamber pressure is, for instance, as illustrated in FIG. 7B. Specifically, the excitation current to the low-pressure valve 30 is constantly OFF and the chamber pressure is also constantly OFF throughout the cycle of the cylinder 20.

However, when there is a sort of abnormality in the hydraulic motor 10, the low-pressure valve 30 may close unintentionally due to some reason even if the low-pressure valve 30 is de-excited, and the chamber pressure may increase as shown in the graph of FIG. 7C, which is a phenomenon called self pumping.

When self pumping occurs in the hydraulic motor 10, the performance of the hydraulic motor 10 may decrease, or the low-pressure valve 30 may get damaged.

Thus, when the low-pressure valve 30 is not supplied with the excitation current (when the low-pressure valve 30 is de-excited), whether there is abnormality in the hydraulic motor 10 is determined on the basis of a difference in the change of the chamber pressure, taking advantage of the difference in the change of the chamber pressure between a case in which the hydraulic motor 10 is normal (see FIG. 7B) and a case with abnormality (see FIG. 7C). In other words, it is possible to determine abnormality of the hydraulic motor 10 including self pumping on the basis of the measurement result obtained by the pressure sensor 72 when the low-pressure valve 30 is not supplied with the excitation current.

First, the first abnormality determination part 114 measures a period t₁ during which the pressure of the working chamber 24 is at least the second threshold Pₜₕ₂ (see S104 in FIG. 8) in a period during which the excitation current to the low-pressure valve 30 is at most the first threshold Iₜₕ₁ (see S106 of FIG. 8) and the rotation shaft 32 performs one revolution (period T* in FIG. 7). Then, if the period t₁ continues for at least a predetermined period T₁ (Yes in S108 of FIG. 8), and a period during which the pressure of the working chamber it at most the third threshold (a period during which the working chamber has a relatively low pressure) continues for at least a predetermined period T₂ immediately before the period t₁ during one revolution of the rotation shaft, it is determined that abnormality (the first abnormality mode) is occurring in the hydraulic motor 10 (Yes in S120 of FIG. 8).

The first threshold Iₜₕ₁ of the excitation current may be a mean value of the current value of when the excitation current is ON and the mean value of when the excitation current is OFF. Further, the second threshold Pₜₕ₂ of the pressure of the working chamber 24 may be a mean value of the pressure of when the chamber pressure is ON and the pressure of when the chamber pressure is OFF.

The continuous counter and the cumulative counter (see S102 and the like) in FIG. 8 will be described later.

In one embodiment, the above determination is performed using a predetermined period T₁ which satisfies a relationship represented by 0.15T* ≤ T₁ ≤ 0.25T*, where ω_{rated} is the rated rotation speed (rpm) of the hydraulic motor 10 and T* = 60/ω_{rated}.

In one embodiment, the length of the period t₁ during which the chamber pressure is at least the second threshold Pₜₕ₂ (the chamber pressure is ON) may be obtained on the basis of the increase time point and the decrease time point of the chamber pressure.

For instance, the period t₁ may be from the increase-starting time point tᵤₚ to the decrease-starting time point t_{down} of the chamber pressure (see FIG. 7C). Alternatively, the period t₁ may be from an increase-ending time point to a decrease-ending time point of the chamber pressure (not illustrated).

Since an increase and a decrease of the chamber pressure is in fact an instant event, the period from the increase time point to the decrease time point of the chamber pressure may be regarded to have the length of the period t₁ during which the chamber pressure is at least a threshold (chamber pressure is ON).

As described above, a relative phase (time axis) is used as a basis of a period during which the chamber pressure is ON during one revolution of the rotation shaft 32, instead of an absolute phase (rotational angle) of the rotation shaft. In this way, it is no longer necessary to take into account inconvenient matters such as an error like a phase error which may occur in a rotation-pulse sensor for measuring the rotation angle.

In one embodiment, after determining whether there is abnormality in the hydraulic motor 10 on the basis of the length t₁ of the period during which the chamber pressure is at least the second threshold Pₜₕ₂ (the chamber pressure is ON) as described above, the first abnormality determination part 114 measures a period t₂ during which the pressure inside the working chamber 24 is at most the third threshold Pₜₕ₃ (the chamber pressure is OFF) during one revolution of the rotation shaft 32 of the hydraulic motor 10. Then, on the basis of whether the above period t₂ continues for at least the predetermined period T₂, the first abnormality determination part 114 determines the abnormality mode of the hydraulic machine (see S120 in FIG. 8).

In one embodiment, the first abnormality determination part 114 determines that the second abnormality mode (juddering; see FIG. 7D) in which the low-pressure valve fails to open due to a delay in the closing timing of the high-pressure valve, if the period t₂ does not continue for at least the predetermined period T². Further, the first abnormality determination part 114 determines that the first abnormality mode (the above described self pumping; see FIG. 7C) in which the low-pressure valve opens as the high-pressure valve closes at an appropriate timing but the valve body of the low-pressure valve closes even when the low-pressure valve is not supplied with the excitation current, if the period t₂ continues for at least the predetermined period T₂ (see S120 of FIG. 8).

Juddering is a phenomenon that occurs during an active cycle of the cylinder 20, in which the high-pressure valve 28 does not close normally in the vicinity of the bottom dead center of the piston 22 and thus the low-pressure valve 30 fails to open even though being de-excited, so that the pressure inside the working chamber 24 is high in most time of the rotational cycle of the rotation shaft 32.

The juddering illustrated in FIG. 7D is intermittent juddering, in which the high-pressure valve 28 closes at a timing later than a predetermined timing, and thereby the piston 22 reaches the bottom dead center while the low-pressure valve 30 cannot open even when de-excited due to a fluid pressure differential applied to either side of the valve body 48. In this case, when the piston 22 starts ascending toward the top dead center from the bottom dead center afterward, the working fluid in the working chamber 24 is compressed while the high-pressure valve 28 is open and the low-pressure valve 30 is closed, which makes it even more difficult for the low-pressure valve 30 to open. With regard to the change in the chamber pressure, the period during which the chamber pressure is at least the second threshold Pₜₕ₂ (the chamber pressure is ON) is longer when the intermittent juddering is occurring than when the operation is normal as illustrated in FIG. 7A.

Further, juddering called "continuous juddering" may also occur, in which the valve body 35 becomes immovable due to sticking of the movable unit 40 of the high-pressure valve 28 or entry of foreign matters, so that the high-pressure valve 28 fails to close and continues to be open during the entire period of the reciprocating motion of the piston 22. With regard to the change in the chamber pressure, the period during which the chamber pressure is at least the second threshold Pₜₕ₂ (the chamber pressure is ON) is remarkably longer when the continuous juddering is occurring than when the operation is normal as illustrated in FIG. 7A.

When the above described juddering is occurring, the chamber pressure may decrease rapidly and then immediately increase, as indicated by arrow "A" in FIG. 7D. At this time, an event may occur, in which the period t₁ during which the pressure of the working chamber 24 is at least the second threshold Pₜₕ₂ continues for at least the predetermined period T₁ in a period (period T* in FIG. 7) during which the excitation current to the low-pressure valve 30 is at most the first threshold Iₜₕ₁ and the rotation shaft 32 performs one revolution. In this case, since the period t₁ continues for at least the predetermined period T₁, there is a risk of wrongly determining that the above described "self pumping" event is occurring. However, since a period during which the pressure of the working chamber is at most the third threshold (a period during which the working chamber has a relatively low pressure) does not continue for at least the predetermined period T₂ while the rotation shaft performs one revolution, it is determined that a different abnormality (the second abnormality mode) is occurring in the hydraulic motor 10 (No in S 120 of FIG. 8).

Self pumping and juddering are similar in that the low-pressure valve is kept closed unintentionally and the chamber pressure is high. However, the cause of the self-pumping is malfunction of the operation of the low-pressure valve, while the cause of the juddering is malfunction of the operation of the high-pressure valve. Since the two phenomena are caused by different mechanisms, it is desirable to be able to determine which phenomenon of self pumping (the first abnormality mode) or juddering (the second abnormality mode) is occurring, in order to determine abnormality of the hydraulic motor 10 appropriately.

In this regard, it is possible to determine the abnormality mode of the hydraulic motor 10 precisely on the basis of whether the period t₂ during which the pressure of the working chamber 24 is at most the third threshold Pₜₕ₃ (the chamber pressure is OFF) during one revolution of the rotation shaft 32 of the hydraulic motor 10 continues for at least the predetermined period T₂.

In one embodiment, the above determination is performed using a predetermined period T₂ which satisfies a relationship represented by 0.25T* ≤ T₂ ≤ 0.45T*, where ω_{rated} is the rated rotation speed (rpm) of the hydraulic motor 10 and T* = 60/ω_{rated}.

Self pumping occurs after occurrence of an event in which the high-pressure valve 28 closes just before the piston 22 moves to reach the bottom dead center from the top dead center so that the volume of the working chamber expands to decrease the chamber pressure and the low-pressure valve 30 is open. Thus, the chamber pressure is low (OFF) for a predetermined period in the reciprocating cycle of the piston 22. Therefore, on the basis of T₂ satisfying the above relationship, it is possible to determine whether the current abnormality event is self-pumping.

As described above, by the steps S104 to S122 in FIG. 8, it is possible to detect occurrence of self pumping, which is the first abnormality mode.

Meanwhile, if abnormality of the hydraulic motor 10 is determined from detection of occurrence of self pumping in only a single cycle or a couple of cycles while the cylinder cycle is repeated for more than once, the accuracy of the abnormality determination may be low.

In this regard, abnormality (self pumping) may be determined to be occurring in the hydraulic motor 10 only when self pumping is detected in a predetermined number of cycles in the repeated cylinder cycles.

In one embodiment, the first abnormality determination part 114 determines that abnormality is occurring in the hydraulic motor 10, if the continuous occurrence number N₁ of an event exceeds a threshold, the event being such that the period t₁ during which the pressure of the working chamber 24 is at least the second threshold Pₜₕ₂ continues for at least the predetermined period T₁ in a period (period of length T*) during which the excitation current to the low-pressure valve 30 is at most the first threshold Iₜₕ₁ and the rotation shaft 32 performs one revolution (see Yes in S126 and S127 of FIG. 8).

The number of continuous occurrence is the number of cycles in which the above event occurs continuously in the cylinder cycles repeated more than once.

In one embodiment, the first abnormality determination part 114 determines that abnormality is occurring in the hydraulic motor 10, if the cumulative occurrence number N₂ of an event exceeds a threshold, the event being such that the period t₁ during which the pressure of the working chamber 24 is at least the second threshold Pₜₕ₂ continues for at least the predetermined period T₁, in a period (period of length T*) during which the excitation current to the low-pressure valve 30 is at most the first threshold Iₜₕ₁ and the rotation shaft 32 performs one revolution (see Yes in S128 and S130 of FIG. 8).

The number of cumulative occurrence is the number of cycles in which the above event occurs, among the cylinder cycles repeated more than once. The number of cycles is counted also including non-successive cycles with the above event.

Once self pumping occurs in a cylinder, the self-pumping would occur in every cycle from then on both in the active and inactive cycles of the same cylinder. However, in the active cycle, abnormality of the hydraulic motor 10 is not detected by the diagnosis system of the above embodiment and abnormality is detected in the inactive cycle, because the excitation current is supplied to the low-pressure valve 30.

During high-load operation, the ratio of cycles in which the low-pressure valve 30 is supplied with the excitation current (active cycles) during one revolution of the rotation shaft 32 of the hydraulic motor 10 (hydraulic machine) is greater. In such high-load operation, the ratio of cycles in which one cylinder 20 stops supplying the excitation current to the low-pressure valve 30 continuously (inactive cycles) is small. Thus, the above described event is detected in a plurality of discontinuous (non-successive) cycles, and there is a low possibility of detecting the event in more than one cycle successively. Thus, during high-load operation of the hydraulic machine, it is difficult to determine abnormality on the basis of the continuous occurrence number N₁, and it is suitable to determine abnormality on the basis of the cumulative occurrence number N₂.

On the other hand, during low-load operation, the ratio of cycles in which the low-pressure valve 30 is not supplied with the excitation current (inactive cycles) during one revolution of the rotation shaft 32 of the hydraulic motor 10 (hydraulic machine) is greater. In such low-load operation, inactive cycles may be continuously performed by one working chamber. Thus, if the above event occurs during low-load operation, the event is detected continuously in successive inactive cycles, which may make it possible to determine abnormality of the hydraulic motor 10 on the basis of the continuous occurrence number N₁.

In one embodiment, the first abnormality determination part 114 compares the continuous occurrence number N₁ of the event to a threshold (see S126 of FIG. 8), and if the continuous occurrence number N₁ is greater than the threshold (Yes in S126 of FIG. 8), determines that continuous self pumping (abnormality of the hydraulic motor 10) is occurring (see S127 of FIG. 8). Further, the first abnormality determination part 114 compares the cumulative occurrence number N₂ of the event to a threshold (see S128 of FIG. 8), and if the cumulative occurrence number N₂ is greater than the threshold (Yes in S128 of FIG. 8), determines that cumulative self pumping (abnormality of the hydraulic motor 10) is occurring (see S130 of FIG. 8).

In this case, the relationship between the cumulative occurrence number N₂ and the continuous occurrence number N₁ may be represented by N₂ > N₁.

While it is possible to determine abnormality on the basis of the cumulative occurrence number N₂ during low-load operation of the hydraulic motor 10 (hydraulic machine), setting the continuous occurrence number N₁ to be smaller than the cumulative occurrence number N₂ makes it possible to determine occurrence of abnormality in the hydraulic motor 10 more quickly by using the continuous occurrence number N₁ as a determination basis during low-load operation of the hydraulic motor 10.

In one embodiment, the first abnormality determination part 114 includes a continuous counter and a cumulative counter for counting the continuous occurrence number N₁ and the cumulative occurrence number N₂.

In the abnormality determination for the hydraulic motor 10 (hydraulic machine) according to one embodiment, the first abnormality determination part 114 firstly clears the count of each of the continuous counter and the cumulative counter to set the continuous occurrence number N₁ and the cumulative occurrence number N₂ to zero (S102 in FIG. 8).

Then, the first abnormality determination part 114 performs the determination of the series of steps S104 to S120 in FIG. 8. If the chamber pressure does not reach a threshold or higher in S104 (No in S104), the procedure proceeds as follows. If the previous cylinder cycle is an active cycle and has been performed normally (i.e., the change of the chamber pressure has been normal; Yes in S110), the first abnormality determination part 114 determines that there is no such abnormality that increases the pressure at an intended timing in the cylinder, clears the count (the continuous occurrence number N₁) of the continuous counter (see S105 of FIG. 8), and returns to step S104, then advancing to detection of self pumping in the next cylinder cycle (S104 to S120). On the other hand, if the previous cycle is not an active cycle, or if the previous cycle is an active cycle but has not been performed normally, the first abnormality determination part 114 returns to step S104 without clearing the continuous counter, and continues detection of abnormality (self pumping) in the same cylinder.

If self pumping is detected as a result of performing determination of the series of steps S104 to S120 in FIG. 8 for each cylinder cycle (see S122 in FIG. 8), each count (the continuous occurrence number N₁ and the cumulative occurrence number N₂) is incremented for the continuous counter and the cumulative counter (S124 in FIG. 8).

Then, occurrence of self pumping is determined on the basis of the continuous occurrence number N₁ and the cumulative occurrence number N₂ (S216 and S218 in FIG. 8), and if occurrence of self pumping is not determined as a result (No in S128), the procedure returns to step S104, and advances to detection of self pumping in the next cylinder cycle (S104 to S120).

In one embodiment, if the rotation speed of the hydraulic motor 10 decreases to a speed less than a threshold during execution of the abnormality determination flow illustrated in FIG. 8, the abnormality determination flow may be stopped temporarily, and the continuous counter and the cumulative counter may be cleared (initialized). Then, after the rotation speed of the hydraulic motor 10 having returned to at least the threshold, the execution of the abnormality determination flow illustrated in FIG. 8 may be started again.

In one embodiment, the diagnosis system 70 of the hydraulic motor 10 further includes the second abnormality determination part 116 for determining abnormality of the hydraulic machine on the basis of the measurement result of the pressure sensor 72, in addition to the first abnormality determination part 114. The second abnormality determination part 116 shifts the supply-start timing or the supply-stop timing of the excitation current to at least one of the high-pressure valve 28 or the low-pressure valve 30 in a predetermined range, and determines abnormality of the hydraulic motor 10 (hydraulic machine) on the basis of an influence of the supply-start timing or the supply-stop timing on the pressure of the working chamber 24.

In one embodiment, the second abnormality determination part 116 determines abnormality of the hydraulic motor 10 on the basis of the manner of a pressure change of the working chamber 24 at the time when the supply-start timing of the excitation current to the low-pressure valve 30 is retarded to a limit of the predetermined range toward the point of time when the piston 22 reaches the top dead center.

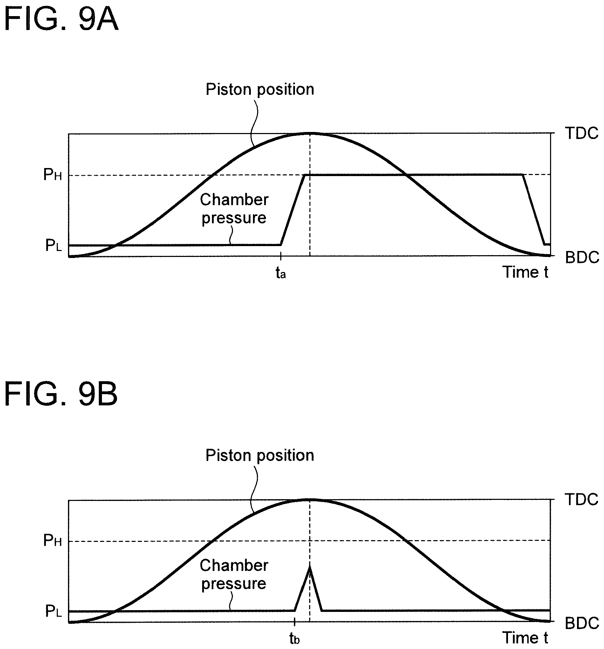

FIG. 9A is a graph showing a change in the chamber pressure during normal operation of the hydraulic motor, and FIG. 9B is a graph showing a change in the chamber pressure when there is the latch failure described below in the hydraulic motor.

As illustrated in FIG. 9A, in the active cycle during normal operation of the hydraulic motor 10 (hydraulic machine), the low-pressure valve 30 is supplied with excitation current to be closed before the piston 22 reaches the top dead center, and then (from time tₐ in FIG. 9A) the high-pressure valve 28 becomes openable as the pressure of the working chamber 24 increases due to the piston 22 moving toward the top dead center. P_{H} in FIGs. 9A and 9B represents the pressure in the high-pressure line 12, and P_{L} represents the pressure in the low-pressure line 14.

Now, as described in FIG. 9B, if the timing to close the low-pressure valve 30 is retarded from the predetermined timing by retarding the supply-start timing of the excitation current to the low-pressure valve 30, the start of the increase in the chamber pressure also retards (time t_{b} in FIG. 9B), and the chamber pressure does not increase sufficiently before the piston 22 reaches the top dead center, causing the high-pressure valve 28 to fail to open at the predetermined timing (this phenomenon will be called "latch fail" hereinafter). At this time, the pressure in the working chamber 24 tries to increase from time t_{b}, but decreases after the top dead center because the high-pressure valve 28 does not open. As a result, the chamber pressure stays close to the pressure of the low-pressure line 14 in most of the period of the cylinder cycle.

If the high-pressure valve 28 and the low-pressure valve 30 are normal, it is possible to intentionally cause the above latch fail by retarding the supply-start timing of the excitation current to the low-pressure valve 30.

However, if a phenomenon in which the low-pressure valve 30 closes even when supplied with the excitation current (i.e. self pumping) is occurring in the active cycle of the cylinder 20, the latch failure does not occur even if the supply-start timing of the excitation current to the low-pressure valve 30 is retarded, because the low-pressure valve 30 closes before the piston 22 passes through the top dead center, which increases the chamber pressure and opens the high-pressure valve 28.

For instance, if the supply-start timing of the excitation current to the low-pressure valve 30 is retarded to the time when the piston 22 passes through the top dead center but the latch failure does not occur, it can be determined that self pumping is occurring in the corresponding cylinder. In other words, it can be determined that abnormality is occurring in the hydraulic motor 10.

As described above, by the second abnormality determination part 116, it is possible to detect self pumping on the basis of whether latch failure is occurring. Further, it is possible to improve the reliability of the abnormality determination for the hydraulic motor 10 (hydraulic machine) by detecting self pumping in each abnormality determination part using both of the first abnormality determination part 114 and the second abnormality determination part 116.

In one embodiment, the wind turbine power generating apparatus 1 includes a pitch drive (pitch drive device) 60 for adjusting the pitch angle of the at least one blade 2. The controller 111 includes a pitch control part 1 13 which controls the hydraulic motor 10 so as to reduce the displacement of the hydraulic motor 10 and controls the pitch drive 60 so as to reduce the wind energy to be extracted by the at least one blade 2, if the first abnormality determination part 114 of the diagnosis system 70 detects abnormality of the hydraulic motor 10.

The displacement of the hydraulic motor 10 having the above configuration depends on the ratio of cylinders 20 performing the active cycle or the inactive cycle among a plurality of cylinders 20 constituting the hydraulic motor 10. To reduce the displacement of the hydraulic motor 10, the ratio of the cylinders 20 performing the inactive cycle among all cylinders 20 of the hydraulic motor 10 is to be increased. Thus, the valve control part 112 may control the high-pressure valve 28 to be kept closed and the low-pressure valve 30 to be kept open, during a cycle in which the piston 22 starts the bottom dead center and returns to the same via the top dead center so as not to increase the pressure of the working oil, thereby causing some cylinders 20 to perform the inactive cycle.

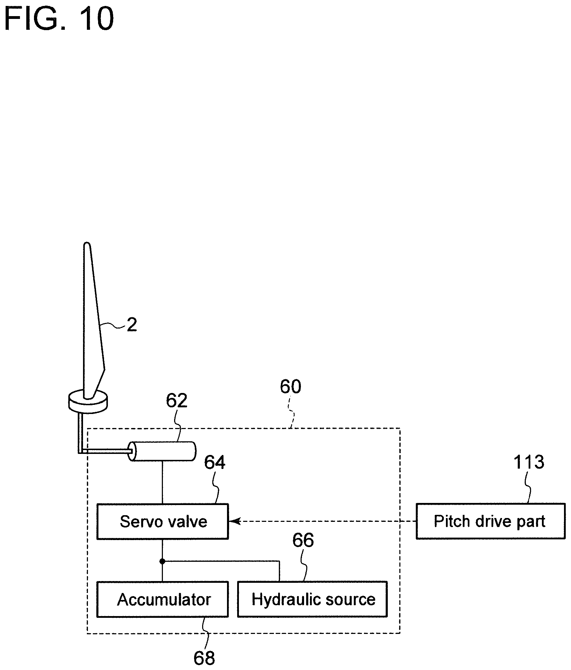

FIG. 10 is a configuration example of a pitch drive. The pitch drive 60 illustrated in FIG. 10 includes a hydraulic cylinder 62, a servo valve 64, a hydraulic source 66 and an accumulator 68, and is accommodated in a hub for housing the hydraulic transmission 7 and the like of the wind turbine power generating apparatus 1 illustrated in FIG. 1. The servo valve 64 adjusts, under the control of the pitch control part 113, the amount of high-pressure oil to be supplied to the hydraulic cylinder 62, the high pressure oil including high-pressure oil generated by the hydraulic source 66 and high-pressure oil stored in the accumulator 68, so as to achieve a desired pitch angle of the at least one blade 2. The pitch drive 60 is controlled by the pitch control part 113 to adjust the pitch angle of the at least one blade 2 and decrease the rotation speed of the rotor 3, thereby reducing the rotation speed of the hydraulic pump 8.

The rotation speed of the hydraulic pump 8 and/or the hydraulic motor 10 is reduced by decreasing the displacement of the hydraulic pump 8 and/or the hydraulic motor 10, while the pitch drive 60 is used to apply an aerodynamic braking force to the rotor 3 to reduce the rotation speed of the hydraulic pump 8. In this way, it is possible to reduce the wind energy to be extracted by the at least one blade 2.

As described above, the displacement of the hydraulic motor 10 is not reduced to zero at once, but is gradually decreased, which makes it possible to stop the wind turbine power generating apparatus 1 while protecting the constituent members (e.g. the high-pressure valve 28 and the low-pressure valve 30) of the hydraulic motor 10.

## Claims

1. A diagnosis system of a hydraulic machine (10),
the hydraulic machine (10) comprising:
a rotation shaft (32);
a cylinder (20);
a piston (22) forming a working chamber (24) together with the cylinder (20); and
a high-pressure valve (28) and a low-pressure valve (30) provided for the working chamber (24),
wherein the hydraulic machine (10) is configured to perform conversion between rotational motion of the rotation shaft (32) and reciprocating motion of the piston (22); and **characterised in that** the diagnosis system comprises:
a pressure sensor (72) for measuring a pressure in the working chamber (24); and
a first abnormality determination part (114) for determining an abnormality of the hydraulic machine (10) on the basis of a measurement result obtained by the pressure sensor (72),
wherein at least one of the high-pressure valve (28) and the low-pressure valve (30) is a valve that is configured such that a valve body (35,48) is movable, by supply control of an excitation current, between a normal position at which the valve is not supplied with the excitation current and an excitation position at which the valve is supplied with the excitation current, and
wherein the first abnormality determination part (114) is configured to determine the abnormality of the hydraulic machine (10) on the basis of the measurement result obtained by the pressure sensor (72) when the valve is not supplied with the excitation current.

2. The diagnosis system of a hydraulic machine (10) according to claim 1,
wherein the low-pressure valve (30) is a normally-open solenoid valve configured to be open when the low-pressure valve (30) is not supplied with the excitation current and the valve body (48) is at the normal position, and
wherein the first abnormality determination part (114) is configured to detect an abnormality of the hydraulic machine (10) on the basis of whether a period during which the pressure in the working chamber (24) is at least a second threshold continues for at least a predetermined period T1 while the excitation current supplied to the low-pressure valve (30) is at most a first threshold and during one revolution of the rotation shaft (32).

3. The diagnosis system of a hydraulic machine (10) according to claim 2,
wherein the predetermined period T1 satisfies a relationship represented by 0.15T* ≤ T1 ≤ 0.25T*, where T* = 60/ω_{rated}, and ω_{rated} is a rated rotation speed (rpm) of the hydraulic machine (10).

4. The diagnosis system of a hydraulic machine (10) according to claim 2 or 3,
wherein the first abnormality determination part (114) is configured to obtain a length of a period during which the pressure in the working chamber (24) is at least the second threshold, on the basis of an increase time point and a decrease time point of the pressure in the working chamber (24) .

5. The diagnosis system of a hydraulic machine (10) according to any one of claims 1 to 4,
wherein the first abnormality determination part (114) is configured to determine an abnormality mode from among a plurality of abnormality modes of the hydraulic machine (10) on the basis of whether a period during which the pressure in the working chamber (24) is at most a third threshold continues for at least a predetermined time T2 during one revolution of the rotation shaft (32).

6. The diagnosis system of a hydraulic machine (10) according to claim 5,
wherein the high-pressure valve (28) is a normally-closed solenoid valve,
wherein the low-pressure valve (30) is a normally-open solenoid valve, and
wherein the first abnormality determination part (114) is configured to determine whether the abnormality mode of the hydraulic machine (10) is a second abnormality mode in which the low-pressure valve (30) fails to open due to a delay in a closing timing of the high-pressure valve (28), or a first abnormality mode in which the low-pressure valve (30) opens due to a closure of the high-pressure valve (28) at an appropriate timing, but the valve body (48) of the low-pressure valve (30) closes even when the low-pressure valve (30) is not supplied with the excitation current.

7. The diagnosis system of a hydraulic machine (10) according to claim 5 or 6,
wherein the predetermined period T2 satisfies a relationship represented by 0.25T* ≤ T2 ≤ 0.45T*, where T* = 60/ω_{rated}, and ω_{rated} is a rated rotation speed (rpm) of the hydraulic machine (10).

8. The diagnosis system of a hydraulic machine (10) according to any one of claims 1 to 7, further comprising
a second abnormality determination part (116) configured to shift a supply-start timing or a supply-stop timing of the excitation current supplied to the valve within a predetermined range, and to determine an abnormality of the hydraulic machine (10) on the basis of an influence of the supply-start timing or the supply-halt timing on the pressure in the working chamber (24).

9. The diagnosis system of a hydraulic machine (10) according to claim 8,
wherein the high-pressure valve (28) is a normally-closed solenoid valve,
wherein the low-pressure valve (30) is a normally-open solenoid valve, and
wherein the second abnormality determination part (116) is configured to determine an abnormality of the hydraulic machine (10) on the basis of a manner of a change in the pressure in the working chamber (24) at the time when the supply-start timing of the excitation current to the low-pressure valve (30) is retarded to a limit of the predetermined range toward a point of time at which the piston (22) reaches the top dead center.

10. The diagnosis system of a hydraulic machine (10) according to any one of claims 1 to 9,
wherein the low-pressure valve (30) is a normally-open solenoid valve configured to open when the low-pressure valve (30) is not supplied with the excitation current and the valve body (48) is at the normal position, and
wherein the first abnormality determination part (114) is configured to determine that an abnormality is occurring in the hydraulic machine (10) when a continuous occurrence number N1 or a cumulative occurrence number N2 (where N2 >N1) of an event is greater than a threshold, the event being such that the period during which the pressure in the working chamber (24) is at least the second threshold continues for at least the predetermined period T1 while the excitation current to the low-pressure valve (30) is at most the first threshold and during one revolution of the rotation shaft (32) .

11. A hydraulic machine (10) comprising the diagnosis system according to any one of claims 1 to 10.

12. A wind turbine power generating apparatus (1), comprising:
a rotor (3) configured to rotate by receiving wind;
a hydraulic pump (8) configured to be driven by the rotor (3) to generate pressurized oil; and
a hydraulic motor (10) driven by the pressurized oil,
wherein at least one of the hydraulic pump (8) or the hydraulic motor (10) comprises the hydraulic machine according to claim 11.

13. The wind turbine power generating apparatus (1) according to claim 12, wherein the rotor (3) includes a hub (4) and at least one blade (2) mounted to the hub (4), and the wind turbine power generating apparatus (1) further comprises:
a pitch drive (60) for adjusting a pitch angle of the at least one blade (2); and
a controller (113) configured to control the hydraulic machine so that a displacement of the hydraulic machine decreases and control the pitch drive (60) so that wind energy to be extracted by the at least one blade (2) decreases, if the first abnormality determination part (114) detects an abnormality of the hydraulic machine.

14. A method of diagnosing a hydraulic machine (10) including a rotation shaft (32), a cylinder (20), a piston (22) forming a working chamber (24) together with the cylinder (20), and a high-pressure valve (28) and a low-pressure valve (30) provided for the working chamber (24), the hydraulic machine (10) being configured to perform conversion between rotational motion of the rotation shaft (32) and reciprocating motion of the piston (22), the method comprising:
a pressure-measuring step of measuring a pressure in the working chamber (24); and
a first abnormality determination step of determining an abnormality of the hydraulic machine (10) on the basis of a measurement result obtained in the pressure-measuring step,
wherein at least one of the high-pressure valve (28) and the low-pressure valve (30) is a valve that is configured such that a valve body (35,48) is movable, by supply control of excitation current, between a normal position at which the valve is not supplied with the excitation current and an excitation position at which the valve is supplied with the excitation current, and
wherein the first abnormality determination step comprises determining an abnormality of the hydraulic machine (10) on the basis of the measurement result obtained in the pressure-measuring step when the valve is not supplied with the excitation current.

## Patentansprüche

1. Ein Diagnosesystem einer hydraulischen Maschine (10), wobei die hydraulische Maschine (10) umfasst:
eine Drehwelle (32),
einen Zylinder (20),
einen Kolben (22), der zusammen mit dem Zylinder (20) eine Arbeitskammer (24) bildet, und
ein Hochdruckventil (28) und ein Niederdruckventil (30), die für die Arbeitskammer (24) vorgesehen sind,
wobei die hydraulische Maschine (10) so konfiguriert ist, dass sie eine Umwandlung zwischen einer Rotationsbewegung der Drehwelle (32) und einer Hin- und Herbewegung des Kolbens (22) ausführt, und
**dadurch gekennzeichnet, dass** das Diagnosesystem umfasst:
einen Drucksensor (72) zum Messen eines Drucks in der Arbeitskammer (24), und
ein erstes Anomalie-Bestimmungsteil (114) zum Bestimmen einer Anomalie der hydraulischen Maschine (10) auf der Basis eines von dem Drucksensor (72) erhaltenen Messergebnisses,
wobei mindestens eines von dem Hochdruckventil (28) und dem Niederdruckventil (30) ein Ventil ist, das so konfiguriert ist, dass ein Ventilkörper (35,48) durch Zufuhrsteuerung eines Erregerstroms zwischen einer Normalposition, in der das Ventil nicht mit dem Erregerstrom versorgt wird, und einer Erregerposition, in der das Ventil mit dem Erregerstrom versorgt wird, bewegbar ist, und
wobei das erste Anomalie-Bestimmungsteil (114) konfiguriert ist, um die Anomalie der hydraulischen Maschine (10) auf der Basis des Messergebnisses zu bestimmen, das durch den Drucksensor (72) erhalten wird, wenn das Ventil nicht mit dem Erregerstrom versorgt wird.

2. Das Diagnosesystem einer hydraulischen Maschine (10) nach Anspruch 1,
wobei das Niederdruckventil (30) ein normalerweise offenes Magnetventil ist, das konfiguriert ist, um offen zu sein, wenn das Niederdruckventil (30) nicht mit dem Erregerstrom versorgt wird und der Ventilkörper (48) sich in der normalen Position befindet, und
wobei das erste Anomalie-Bestimmungsteil (114) konfiguriert ist, um eine Anomalie der hydraulischen Maschine (10) auf der Grundlage davon zu erfassen, ob eine Periode, während der der Druck in der Arbeitskammer (24) mindestens ein zweiter Schwellenwert ist, für mindestens eine vorbestimmte Periode T1 andauert, während der Erregerstrom, der dem Niederdruckventil (30) zugeführt wird, höchstens ein erster Schwellenwert ist, und während einer Umdrehung der Drehwelle (32).

3. Das Diagnosesystem einer hydraulischen Maschine (10) nach Anspruch 2,
wobei die vorbestimmte Periode T1 eine Beziehung erfüllt, die durch 0,15T* ≤ T1 ≤ 0,25T* dargestellt ist, wobei T* = 60/ω_{rated} und ω_{rated} eine Nenndrehzahl (rpm) der hydraulischen Maschine (10) ist.

4. Das Diagnosesystem einer hydraulischen Maschine (10) nach Anspruch 2 oder 3,
wobei das erste Anomalie-Bestimmungsteil (114) konfiguriert ist, um eine Länge einer Periode, während der der Druck in der Arbeitskammer (24) mindestens den zweiten Schwellenwert beträgt, auf der Basis eines Anstiegszeitpunkts und eines Abfallzeitpunkts des Drucks in der Arbeitskammer (24) zu erhalten.

5. Das Diagnosesystem einer hydraulischen Maschine (10) nach einem der Ansprüche 1 bis 4,
wobei das erste Anomalie-Bestimmungsteil (114) konfiguriert ist, um einen Anomaliemodus aus einer Vielzahl von Anomaliemodi der hydraulischen Maschine (10) auf der Basis zu bestimmen, ob eine Periode, während der der Druck in der Arbeitskammer (24) höchstens einen dritten Schwellenwert beträgt, für mindestens eine vorbestimmte Zeit T2 während einer Umdrehung der Drehwelle (32) andauert.

6. Das Diagnosesystem einer hydraulischen Maschine (10) nach Anspruch 5,
wobei das Hochdruckventil (28) ein normal geschlossenes Magnetventil ist,
wobei das Niederdruckventil (30) ein normal geöffnetes Magnetventil ist, und
wobei das erste Anomalie-Bestimmungsteil (114) konfiguriert ist, um zu bestimmen, ob der Anomaliemodus der hydraulischen Maschine (10) ein zweiter Anomaliemodus ist, in dem das Niederdruckventil (30) aufgrund einer Verzögerung in einem Schließzeitpunkt des Hochdruckventils (28) nicht öffnet, oder ein erster Anomaliemodus, in dem das Niederdruckventil (30) aufgrund eines Schließens des Hochdruckventils (28) zu einem geeigneten Zeitpunkt öffnet, aber der Ventilkörper (48) des Niederdruckventils (30) schließt, selbst wenn das Niederdruckventil (30) nicht mit dem Erregerstrom versorgt wird.

7. Das Diagnosesystem einer hydraulischen Maschine (10) nach Anspruch 5 oder 6,
wobei die vorbestimmte Periode T2 eine Beziehung erfüllt, die durch 0,25T* ≤ T2 ≤ 0,45T* dargestellt wird, wobei T* = 60/ω_{rated} und ω_{rated} eine Nenndrehzahl (rpm) der hydraulischen Maschine (10) ist.

8. Das Diagnosesystem einer hydraulischen Maschine (10) nach einem der Ansprüche 1 bis 7, ferner umfassend
ein zweites Anomalie-Bestimmungsteil (116), das konfiguriert ist, um einen Versorgungs-Start-Zeitpunkt oder einen Versorgungs-Stopp-Zeitpunkt des dem Ventil zugeführten Erregerstroms innerhalb eines vorbestimmten Bereichs zu verschieben und eine Anomalie der hydraulischen Maschine (10) auf der Grundlage eines Einflusses des Versorgungs-Start-Zeitpunkts oder des Versorgungs-Stopp-Zeitpunkts auf den Druck in der Arbeitskammer (24) zu bestimmen.

9. Das Diagnosesystem einer hydraulischen Maschine (10) nach Anspruch 8,
wobei das Hochdruckventil (28) ein normal geschlossenes Magnetventil ist,
wobei das Niederdruckventil (30) ein normal geöffnetes Magnetventil ist, und
wobei das zweite Anomalie-Bestimmungsteil (116) konfiguriert ist, um eine Anomalie der hydraulischen Maschine (10) auf der Grundlage einer Art und Weise einer Änderung des Drucks in der Arbeitskammer (24) zu der Zeit zu bestimmen, zu dem der Zufuhr-Start-Zeitpunkt des Erregerstroms zu dem Niederdruckventil (30) auf eine Grenze des vorbestimmten Bereichs in Richtung einer Zeit verzögert wird, zu der der Kolben (22) den oberen Totpunkt erreicht.

10. Das Diagnosesystem einer hydraulischen Maschine (10) nach einem der Ansprüche 1 bis 9,
wobei das Niederdruckventil (30) ein normal offenes Magnetventil ist, das konfiguriert ist, um sich zu öffnen, wenn das Niederdruckventil (30) nicht mit dem Erregerstrom versorgt wird und der Ventilkörper (48) sich in der normalen Position befindet, und
wobei der erste Anomalie-Bestimmungsteil (114) konfiguriert ist, um zu bestimmen, dass eine Anomalie in der hydraulischen Maschine (10) auftritt, wenn eine kontinuierliche Auftretenszahl N1 oder eine kumulative Auftretenszahl N2 (wobei N2 >N1) eines Ereignisses größer als ein Schwellenwert ist, wobei das Ereignis derart ist, dass die Periode, während der der Druck in der Arbeitskammer (24) mindestens den zweiten Schwellenwert beträgt, für mindestens die vorbestimmte Periode T1 andauert, während der Erregerstrom zum Niederdruckventil (30) höchstens den ersten Schwellenwert beträgt, und während einer Umdrehung der Drehwelle (32).

11. Eine hydraulische Maschine (10) mit dem Diagnosesystem nach einem der Ansprüche 1 bis 10.

12. Eine Windturbinen-Energieerzeugungsvorrichtung (1), umfassend:
einen Rotor (3), der konfiguriert ist, um sich durch Aufnahme von Wind zu drehen,
eine Hydraulikpumpe (8), die konfiguriert ist, um durch den Rotor (3) angetrieben zu werden, um unter Druck stehendes Öl zu erzeugen, und
einen Hydraulikmotor (10), der durch das unter Druck stehende Öl angetrieben ist,
wobei mindestens eine von der Hydraulikpumpe (8) oder dem Hydraulikmotor (10) die hydraulische Maschine nach Anspruch 11 umfasst.

13. Die Windturbinen-Energieerzeugungsvorrichtung (1) nach Anspruch 12, wobei der Rotor (3) eine Nabe (4) und mindestens ein an der Nabe (4) angebrachtes Blatt (2) umfasst, und die Windturbinen-Energieerzeugungsvorrichtung (1) ferner umfasst:
einen Pitch- oder Neigungsantrieb (60) zum Einstellen eines Pitch- oder Neigungswinkels des mindestens einen Blattes (2), und
eine Steuerung (113), die konfiguriert ist, um die hydraulische Maschine so zu steuern, dass eine Verschiebung der hydraulischen Maschine abnimmt, und um den Pitch- oder Neigungsantrieb (60) so zu steuern, dass Windenergie, die durch das mindestens eine Blatt (2) zu extrahieren ist, abnimmt, wenn das erste Anomalie-Bestimmungsteil (114) eine Anomalie der hydraulischen Maschine erfasst.

14. Ein Verfahren zur Diagnose einer hydraulischen Maschine (10) mit einer Drehwelle (32), einem Zylinder (20), einem Kolben (22), der zusammen mit dem Zylinder (20) eine Arbeitskammer (24) bildet, und einem Hochdruckventil (28) und einem Niederdruckventil (30), die für die Arbeitskammer (24) vorgesehen sind, wobei die hydraulische Maschine (10) konfiguriert ist, um eine Umwandlung zwischen einer Drehbewegung der Drehwelle (32) und einer Hin- und Herbewegung des Kolbens (22) auszuführen, wobei das Verfahren umfasst:
einen Druckmessschritt des Messens eines Drucks in der Arbeitskammer (24), und
einen ersten Anomalie-Bestimmungsschritt des Bestimmens einer Anomalie der hydraulischen Maschine (10) auf der Basis eines in dem Druckmessschritt erhaltenen Messergebnisses,
wobei mindestens eines von dem Hochdruckventil (28) und dem Niederdruckventil (30) ein Ventil ist, das so konfiguriert ist, dass ein Ventilkörper (35,48) durch Zuführungssteuerung von Erregerstrom zwischen einer Normalposition, in der das Ventil nicht mit dem Erregerstrom versorgt wird, und einer Erregerposition, in der das Ventil mit dem Erregerstrom versorgt wird, bewegbar ist, und
wobei der erste Anomalie-Bestimmungsschritt das Bestimmen einer Anomalie der hydraulischen Maschine (10) auf der Basis des Messergebnisses umfasst, das in dem Druckmessschritt erhalten wird, wenn das Ventil nicht mit dem Erregerstrom versorgt wird.

## Revendications

1. Système de diagnostic d'une machine (10) hydraulique, comprenant :
un arbre (32) de rotation ;
un cylindre (20) ;
un piston (22) formant une chambre (24) de travail ensemble avec le cylindre (20) ;
une vanne (28) de haute pression et une vanne (30) de basse pression prévues pour la chambre (24) de travail,
dans lequel la machine (10) hydraulique est configurée pour effectuer une transformation entre un mouvement de rotation de l'arbre (32) de rotation et un mouvement de va-et-vient du piston (22) ; et
**caractérisé en ce que** le système de diagnostic comprend :
un capteur (22) de pression pour mesurer une pression dans la chambre (24) de travail ; et
une première partie (114) de détermination d'une anomalie pour déterminer une anomalie de la machine (10) hydraulique sur la base d'un résultat de mesure obtenu par le capteur (72) de pression,
dans lequel l'une au moins de la vanne (28) de haute pression et de la vanne (30) de basse pression est une vanne qui est configurée de manière à ce qu'un corps (35, 48) de la vanne soit mobile, par commande par alimentation en un courant d'excitation, entre une position normale où la vanne n'est pas alimentée en le courant d'excitation et une position d'excitation où la vanne est alimentée en le courant d'excitation et
dans lequel la première partie (114) de détermination d'une anomalie est configurée pour déterminer l'anomalie de la machine (10) hydraulique sur la base du résultat de la mesure obtenu par le capteur (72) de pression lorsque la vanne n'est pas alimentée en le courant d'excitation.

2. Système de diagnostic d'une machine (10) hydraulique suivant la revendication 1,
dans lequel la vanne (30) de basse pression est une électrovanne normalement ouverte configurée pour être ouverte lorsque la vanne (30) de basse pression n'est pas alimentée en le courant d'excitation et lorsque le corps (48) de la vanne est dans la position normale et
dans lequel la première partie (114) de détermination d'une anomalie est configurée pour détecter une anomalie de la machine (10) hydraulique sur la base du point de savoir si une durée, pendant laquelle la pression dans la chambre (24) de travail est d'au moins un deuxième seuil, se continue pendant au moins une durée (T1) déterminée à l'avance, alors que le courant d'excitation envoyé à la vanne (30) de basse pression est au plus à un premier seuil et pendant un tour de l'arbre (32) de rotation.

3. Système de diagnostic d'une machine (10) hydraulique suivant la revendication 2,
dans lequel la durée T1 déterminée à l'avance satisfait une relation représentée par 0,15T* ≤ T1 ≤ 0,25T*, dans lequel T* = 60/ω_{rated} , et ω_{rated} est une vitesse (tpm) de rotation nominale de la machine (10) hydraulique.

4. Système de diagnostic d'une machine (10) hydraulique suivant la revendication 2 ou 3,
dans lequel la première partie (114) de détermination d'une anomalie est configurée pour obtenir une longueur d'une durée pendant laquelle la pression dans la chambre (24) de travail est au moins le deuxième seuil sur la base d'un instant d'augmentation et d'un instant de diminution de la pression dans la chambre (24) de travail.

5. Système de diagnostic d'une machine (10) hydraulique suivant l'une quelconque des revendications 1 à 4,
dans laquelle la première partie (114) de détermination d'une anomalie est configurée pour déterminer un mode d'anomalie parmi une pluralité de modes d'anomalie de la machine (10) hydraulique sur la base du point de savoir si une durée, pendant laquelle la pression dans la chambre (24) de travail est au plus un troisième seuil, se continue pendant au moins un temps (T2) déterminé à l'avance pendant un tour de l'arbre (32) de rotation.

6. Système de diagnostic d'une machine (10) hydraulique suivant la revendication 5,
dans lequel la vanne (28) de haute pression est une électrovanne normalement fermée,
dans lequel la vanne (30) de basse pression est une électrovanne normalement ouverte, et
dans lequel la première partie (114) de détermination d'une anomalie est configurée pour déterminer si le mode d'anomalie, de la machine (10) hydraulique est un deuxième mode d'anomalie dans lequel la vanne (30) de basse pression ne s'ouvre pas en raison d'un retard dans un minutage de fermeture de la vanne (28) de haute pression, ou un premier mode d'anomalie, dans lequel la vanne (30) de basse pression s'ouvre en raison d'une fermeture de la vanne (28) de haute pression à un minutage approprié, mais le corps (48) de la vanne (30) de basse pression se ferme même lorsque la vanne (30) de basse pression n'est pas alimentée en le courant d'excitation.

7. Système de diagnostic d'une machine (10) hydraulique suivant la revendication 5 ou 6,
dans lequel la durée T2 déterminée à l'avance satisfait une relation représentée par 0,15T* ≤ T1 ≤ 0,25T*, dans lesquels T* = 60/ω_{rated}, et ω_{rated} est une vitesse (tpm) de rotation nominale de la machine (10) hydraulique.

8. Système de diagnostic d'une machine (10) hydraulique suivant l'une quelconque des revendications 1 à 7, comprenant en outre
une deuxième partie (116) de détermination d'une anomalie configurée pour décaler un minutage de début d'alimentation ou un minutage de fin d'alimentation du courant d'excitation envoyé à la vanne dans une plage déterminée à l'avance et pour déterminer une anomalie de la machine (10) hydraulique sur la base d'une influence du minutage de début d'alimentation ou du minutage d'arrêt d'alimentation sur la pression dans la chambre (24) de travail.

9. Système de diagnostic d'une machine (10) hydraulique suivant la revendication 8,
dans lequel la vanne (28) de haute pression est une électrovanne normalement fermée,
dans lequel la vanne (30) de basse pression est une électrovanne normalement ouverte, et
dans lequel la deuxième partie (116) de détermination d'une anomalie est configurée pour déterminer une anomalie de la machine (10) hydraulique sur la base d'une manière dont change la pression dans la chambre (24) de travail à l'instant où le minutage de début d'alimentation en le courant d'excitation de la vanne (30) de basse pression est retardé jusqu'à une limite de la plage déterminée à l'avance vers un instant où le piston (22) atteint le point mort.

10. Système de diagnostic d'une machine (10) hydraulique suivant l'une quelconque des revendications 1 à 9,
dans lequel la vanne (30) de basse pression est une électrovanne normalement ouverte configurée pour s'ouvrir lorsque la vanne (30) de basse pression n'est pas alimentée en le courant d'excitation et lorsque le corps (48) de la vanne est dans la position normale et
dans lequel la première partie (114) de détermination d'une anomalie est configurée pour détecter qu'une anomalie se produit dans la machine (10) hydraulique lorsqu'un nombre N1 d'occurrences continues ou un nombre N2 d'occurrences cumulées (avec N2 plus grand que N1) d'un événement est plus grand qu'un seuil, l'événement étant tel que la durée, pendant laquelle la pression dans la chambre (24) de travail est d'au moins le deuxième seuil, se continue pendant au moins la durée (T1) déterminée à l'avance, alors que le courant d'excitation allant à la vanne (30) de basse pression est au moins le premier seuil et pendant un tour de l'arbre (32) de rotation.

11. Machine (10) hydraulique suivant l'une quelconque des revendications 1 à 10.

12. Installation (1) de production d'électricité par éolienne comprenant :
une roue (3) configurée pour tourner en recevant le vent ;
une pompe (8) hydraulique configurée pour être entraînée par le rotor (3) pour produire de l'huile sous pression ;
un moteur (10) hydraulique entraîné par l'huile pression,
dans laquelle au moins l'un de la pompe (8) hydraulique ou du moteur (10) hydraulique comprend la machine hydraulique suivant la revendication 11.

13. Installation (1) de production d'électricité par éolienne suivant la revendication 12, dans laquelle la roue (3) comprend un moyeu (4) et au moins une pale (2) montée sur le moyeu (2) et l'installation (1) de production d'électricité par éolienne comprend en outre :
une commande (60) de pas pour ajuster un angle de pas de la au moins une pale (2) ;
une unité (113) de commande configurée pour commander la machine hydraulique de manière à ce qu'un déplacement de la machine hydraulique diminue et pour commander la commande (60) de pas de manière à diminuer l'énergie éolienne à extraire par la au moins une pale (2), si la première partie (114) de détermination d'une anomalie détecte une anomalie de la machine hydraulique.

14. Procédé de diagnostic d'une machine (10) hydraulique ayant un arbre (32) de rotation, un cylindre (20), un piston (22) formant une chambre (24) de travail ensemble avec le cylindre (20), une vanne (28) de haute pression et une vanne (30) de basse pression prévue pour la chambre (24) de travail, dans lequel la machine (10) hydraulique est configurée pour effectuer une transformation entre un mouvement de rotation de l'arbre (32) de rotation et un mouvement de va-et-vient du piston (22), le procédé comprenant :
un stade de mesure de la pression, dans lequel on mesure une pression dans la chambre (24) de travail ;
un stade de détermination d'une première anomalie dans lequel on détermine une anomalie de la machine (10) hydraulique sur la base d'un résultat de mesure obtenu dans le stade de mesure de la pression,
dans lequel l'une au moins de la vanne (28) de haute pression et de la vanne (30 de basse pression est une vanne qui est configurée de manière à ce qu'un corps (35, 48) de la vanne soit mobile, par commande par alimentation en un courant d'excitation, entre une position normale où la vanne n'est pas alimentée en le courant d'excitation et une position d'excitation où la vanne est alimentée en le courant d'excitation et
dans lequel la première partie (114) de détermination d'une anomalie est configurée pour déterminer l'anomalie de la machine (10) hydraulique sur la base du résultat de la mesure obtenu dans le stade de mesure de la pression, lorsque la vanne n'est pas alimentée en le courant d'excitation.
